# EUROPEAN PATENT APPLICATION

(11) **EP 4 808 174 A1**
(43) Date of publication of application: **16.09.2026**
(21) Application number: 23958010.3
(22) Date of filing: 09.11.2023
(51) Int. Cl.: H04W 8/14

(54) **COMMUNICATION METHOD, DEVICE, AND STORAGE MEDIUM**

(71) Applicant: Beijing Xiaomi Mobile Software Co., Ltd., Beijing 100085 (CN)
(72) Inventor: CHENG, Yajun, Beijing 100085 (CN)
(74) Representative: Gunzelmann, Rainer
(86) International application number: PCT/CN2023/130854
(87) International publication number: WO 2025/097403

(57) **Abstract**

The embodiments of the present disclosure relate to the technical field of communications, and provide a communication method, a device, and a storage medium. The method comprises: a first AP receiving at least one first radio frame, wherein each first radio frame is sent by a neighbor AP, and is used for indicating whether the corresponding neighbor AP needs the first AP to share a TXOP in a first TXOP; and the first AP simultaneously sharing the TXOP to at least one neighbor AP on the basis of the first radio frames, or not sharing the TXOP to any neighbor AP. The embodiments of the present disclosure may provide a TXOP sharing mechanism.

## Description

### TECHNICAL FIELD

The present disclosure relates to the field of communication technology, and specifically to a communication method, a device, and a storage medium.

### BACKGROUND

To achieve a reasonable configuration of communication resources, improve a communication quality and access efficiency, and achieve better network performance, relevant researchers provide a transmission opportunity sharing (TXS) mechanism.

In this mechanism, a holder (access point (AP)) of a TXOP may act as a sharing AP to allocate its reserved TXOP to other APs, and other APs, as shared APs, may perform data transmission with an associated station (STA) within the TXOP shared by the sharing AP. However, with this mechanism, the TXS mechanism is still relatively complicated and easily leads to communication interference problems between APs.

### SUMMARY

Embodiments of the present disclosure provide a communication method, a device, and a storage medium, which may provide a transmission opportunity sharing (TXS) mechanism.

According to a first aspect, embodiments of the present disclosure provide a communication method, including: receiving, by a first access point (AP), at least one first frame, in which a first frame among the at least one first frame is sent by a shared AP and indicates whether the corresponding shared AP requires the first AP to share a transmission opportunity (TXOP) within a first TXOP; and sharing, by the first AP, the TXOP with at least one shared AP, or sharing the TXOP with no shared AP, according to the at least one first frame.

According to a second aspect, embodiments of the present disclosure provide a communication method, including: determining, by a second AP, a first frame, in which the first frame indicates whether the second AP requires a first AP to share a TXOP within a first TXOP, and the second AP is any shared AP of the first AP; and sending, by the second AP, the first frame to enable the first AP to share the TXOP with at least one of shared APs or share the TXOP with no shared AP based on the first frame sent by one or more shared APs.

According to a third aspect, embodiments of the present disclosure provide an AP, including: a transceiver module, configured to receive at least one first frame, in which a first frame among the at least one first frame is sent by a shared AP and indicates whether the corresponding shared AP requires a first AP to share a TXOP within a first TXOP; and the transceiver module is configured to share the TXOP with at least one of shared APs, or share the TXOP with no shared AP, according to the at least one first frame.

According to a fourth aspect, embodiments of the present disclosure provide an AP, including: a processing module, configured to determine a first frame, in which the first frame indicates whether a second AP requires a first AP to share a TXOP within a first TXOP, and the second AP is any shared AP of the first AP; and a transceiver module, configured to send the first frame to enable the first AP to share the TXOP with at least one of shared APs or share the TXOP with no shared AP according to the first frame sent by one or more shared APs.

According to a fifth aspect, embodiments of the present disclosure provide an AP, including one or more processors, in which the AP is configured to perform the communication method provided by the first aspect of the embodiments of the present disclosure.

According to a sixth aspect, embodiments of the present disclosure provide an AP, including one or more processors, in which the AP is configured to perform the communication method provided by the second aspect of the embodiments of the present disclosure.

According to a seventh aspect, embodiments of the present disclosure provide a storage medium for storing instructions. When the instructions are executed on a communication device, the communication device is caused to perform the communication method provided by the first aspect of the embodiments of the present disclosure.

According to an eighth aspect, embodiments of the present disclosure provide a communication system, including a first AP and a second AP. The first AP is configured to perform the method as described in the first aspect, and the second AP is configured to perform the method as described in the second aspect.

Based on the communication method, the device, and the storage medium provided by embodiments of the present disclosure, a mechanism for the AP to share the TXOP according to the first frame sent by a shared AP may be provided.

Additional aspects and advantages of embodiments of present disclosure will be given in part in the following descriptions, become apparent in part from the following descriptions, or be learned from the practice of embodiments of the present disclosure.

### BRIEF DESCRIPTION OF THE DRAWINGS

In order to clearly illustrate technical solutions of embodiments of the present disclosure, a brief description of drawings used in embodiments is given below. Obviously, the drawings in the following descriptions are only part embodiments of the present disclosure, and for those skilled in the art, other drawings may be obtained according to these drawings without creative labor.
FIG. 1 is a schematic diagram of an architecture of a communication system according to embodiments of the present disclosure.
FIG. 2 is an interaction schematic diagram of a communication method according to embodiments of the present disclosure.
FIG. 3 is a first flowchart of a communication method according to embodiments of the present disclosure.
FIG. 4 is a second flowchart of a communication method according to embodiments of the present disclosure.
FIG. 5 is a block diagram of an access point (AP) according to embodiments of the present disclosure.
FIG. 6 is a block diagram of an AP according to embodiments of the present disclosure.
FIG. 7 is a block diagram of a communication device according to embodiments of the present disclosure.
FIG. 8 is a block diagram of a chip according to embodiments of the present disclosure.

### DETAILED DESCRIPTION

Embodiments of the present disclosure provide a communication method, a device, and a storage medium.

According to a first aspect, embodiments of the present disclosure provide a communication method, performed by a first access point (AP), including: receiving, by a first AP, at least one first frame, in which a first frame among the at least one first frame is sent by a shared AP and indicates whether the corresponding shared AP requires the first AP to share a transmission opportunity (TXOP) within a first TXOP; and sharing, by the first AP, the TXOP with at least one shared AP, or sharing the TXOP with no shared AP, according to the at least one first frame.

In the above embodiments, the first AP may, according to the at least one first frame sent by at least one shared AP, achieve sharing the TXOP with the at least one shared AP or sharing the TXOP with no shared AP, which may effectively improve efficiency of TXOP sharing (TXS).

In some embodiments in combination with the first aspect, in some embodiments, the first frame includes a first identifier bit, the first identifier bit indicates, by a first value, that the corresponding shared AP requires the first AP to share the TXOP within the first TXOP, and the first identifier bit indicates, by a second value, that the corresponding shared AP does not require the first AP to share the TXOP within the first TXOP.

In the above embodiments, the first frame sent by the shared AP may quickly indicate, by the first identifier bit, whether the corresponding shared AP requires the first AP to share the TXOP, which is beneficial for the first AP to achieve the TXS in a fast way.

In some embodiments in combination with the first aspect, in some embodiments, the method further includes: sending, by the first AP, a second frame, in which the second frame is configured to discover whether the shared AP of the first AP requires the first AP to share the TXOP within the first TXOP; in which the second frame includes at least one of: a first information field, in which the first information field indicates a first transmission duration remaining in the first TXOP after the first AP sends the second frame; or a second information field, in which the second information field indicates a response timeout of the second frame.

In the above embodiments, the first AP may discover, by the second frame, whether the shared AP requires the first AP to share the TXOP, and in a case that the first information field indicates the first transmission duration remaining in the first TXOP after sending the second frame, the shared AP may be enabled to determine, according to the first transmission duration, whether the shared AP requires the first AP to share the TXOP. In a case that the second frame indicates the response timeout by the second information field, the shared AP may quickly respond to the second frame within the response timeout, which is beneficial to improving efficiency of discovering whether the shared AP requires the first AP to share the TXOP.

In some embodiments in combination with the first aspect, in some embodiments, the first frame sent by the shared AP that requires the first AP to share the TXOP within the first TXOP further includes: a third information field, in which the third information field indicates a second transmission duration required by the corresponding shared AP for data transmission within the first TXOP, the second transmission duration is less than a first duration, and the first duration is a difference between the first transmission duration and the response timeout of the second frame; and a second identifier bit, in which the second identifier bit indicates, by a third value, that a data transmission type of the corresponding shared AP is an emergency transmission type, and indicates, by a fourth value, that the data transmission type of the corresponding shared AP is not the emergency transmission type.

In the above embodiments, when the shared AP requires the first AP to share the TXOP within the first TXOP, the shared AP may indicate, by the sent first frame, the second transmission duration required by the shared AP for data transmission within the first TXOP and/or the data transmission type, so that the first AP may quickly determine the TXOP to be shared for the shared AP according to the above information, thus improving efficiency of TXS.

In some embodiments in combination with the first aspect, in some embodiments, sharing, by the first AP, the TXOP with at least one shared AP, or sharing the TXOP with no shared AP, according to the at least one first frame includes: in a case that it is determined, according to the at least one first frame, that there is no shared AP requiring the first AP to share the TXOP within the first TXOP, sharing, by the first AP, the TXOP with no shared AP within the first TXOP; and in a case that it is determined, according to the at least one first frame, that there is at least one first shared AP requiring the first AP to share the TXOP within the first TXOP, determining and sending a multi-user request-to-send transmission opportunity sharing (MU-RTS TXS) trigger frame based on a communication range of the at least one first shared AP, in which the MU-RTS TXS trigger frame is configured to share the TXOP with at least one shared AP among one or more first shared APs; and the method further includes: in a case that no first frame sent by any shared AP is received within the response timeout, sharing, by the first AP, the TXOP with no shared AP within the first TXOP.

In the above embodiments, the first AP shares the TXOP with no shared AP in a case that it is determined that there is no shared AP requiring the first AP to share the TXOP or in a case that no first frame sent by any shared AP is received within the response timeout. In a case that the first AP determines at least one first shared AP that require the first AP to share the TXOP, the first AP shares the TXOP with the at least one first shared AP according to the MU-RTS TXS trigger frame, thus improving efficiency of TXS and perfecting a mechanism of the TXS.

In some embodiments in combination with the first aspect, in some embodiments, in a case that communication ranges of the at least one first shared AP respectively do not overlap with each other, the MU-RTS TXS trigger frame includes at least one user information field; in which, a user information field among the at least one user information field includes an allocation duration field, the allocation duration field indicates a third transmission duration of the TXOP shared with a first shared AP, and the third transmission duration indicated by the allocation duration field is greater than or equal to the second transmission duration of the corresponding first shared AP and less than the first duration.

In the above embodiments, when the communication ranges of the at least one first shared AP that require the first AP to share the TXOP respectively do not overlap with each other, the first AP may share the TXOP with the at least one first shared AP by the MU-RTS TXS trigger frame. Moreover, the third transmission duration of the TXOP shared with the first shared AP is less than the first duration and not less than the second transmission duration required by the corresponding shared AP for data transmission, so that the first shared AP may complete the data transmission within the first TXOP after receiving the MU-RTS TXS trigger frame, which ensures a communication quality.

In some embodiments in combination with the first aspect, in some embodiments, in a case that communication ranges of the at least one first shared AP overlap with each other and a sum of second transmission durations corresponding to the at least one first shared AP is less than the first duration, the MU-RTS TXS trigger frame includes at least one user information field, and a user information field among the at least one user information field includes an allocation duration field and a fourth information field; in which the allocation duration field indicates a third transmission duration of the TXOP shared with a first shared AP, the third transmission duration indicated by the allocation duration field is greater than or equal to the second transmission duration of a second shared AP, and a sum of third transmission durations indicated by one or more allocation duration fields is less than the first duration; in which the fourth information field indicates a start time of the TXOP shared with the corresponding first shared AP; and in which one or more TXOPs shared by the MU-RTS TXS trigger frame with the at least one shared AP do not overlap with each other.

In the above embodiments, when the communication ranges of the at least one first shared AP that require the first AP to share the TXOP overlap with each other, and the sum of second transmission durations corresponding to the at least one first shared AP is less than the first duration, the first AP may indicate, by the MU-RTS TXS trigger frame, the third transmission duration and the start time of the TXOP shared with the first shared AP. Moreover, the TXOPs shared with the at least one shared AP do not overlap with each other, so that when the first shared AP performs data transmission within the first TXOP, it will not be interfered by other first shared APs, which may effectively improve rational utilization of a communication resource and access efficiency. In addition, the sum of third transmission durations corresponding to the at least one first shared AP is less than the first duration, and the sum of third transmission durations corresponding to the at least one first shared AP is not less than the second transmission duration required by the corresponding shared AP for data transmission, the first shared AP may complete the data transmission within the first TXOP in a non-interfering state after receiving the MU-RTS TXS trigger frame, which ensures a communication quality.

In some embodiments in combination with the first aspect, in some embodiments, in a case that communication ranges of the at least one first shared AP overlap with each other and a sum of second transmission durations of the at least one first shared AP is greater than the first duration, the MU-RTS TXS trigger frame includes at least one user information field, and a user information field among the at least one user information field includes an allocation duration field and a fourth information field; in which the allocation duration field indicates a third transmission duration of the TXOP shared with a second shared AP, the third transmission duration indicated by the allocation duration field is greater than or equal to the second transmission duration of the corresponding second shared AP, and a sum of third transmission durations indicated by one or more allocation duration fields is less than the first duration; in which the second shared AP is determined from the at least one first shared AP based on the first duration and the second transmission duration corresponding to the at least one first shared AP respectively; in which the fourth information field indicates a start time of the TXOP shared with the corresponding second shared AP, and the start time of the TXOP shared with the corresponding second shared AP is determined based on a reception time of the first frame sent by the second shared AP and a data transmission type corresponding to the second shared AP; and in which one or more TXOPs shared by the MU-RTS TXS trigger frame with one or more second shared APs do not overlap with each other.

In the above embodiments, when the communication ranges of the at least one first shared AP that require the first AP to share the TXOP overlap with each other, and the sum of second transmission durations corresponding to the at least one first shared AP is greater than the first duration, the first AP may perform the TXS for one or more second shared APs among the at least one first shared AP by the MU-RTS TXS trigger frame, and indicate the third transmission duration and the start time of the TXOP shared with the one or more second shared APs. Moreover, the TXOPs shared with the one or more second shared APs do not overlap with each other, so that when the second shared AP performs data transmission within the first TXOP, it will not be interfered by other second shared APs, which may effectively improve rational utilization of a communication resource and access efficiency. In addition, the sum of third transmission durations corresponding to the one or more second shared APs is less than the first duration, and the sum of third transmission durations corresponding to the one or more second shared APs is not less than the second transmission duration required by the corresponding shared AP for data transmission, so that the second shared AP may complete the data transmission within the first TXOP in a non-interfering state after receiving the MU-RTS TXS trigger frame, which ensures a communication quality.

In some embodiments in combination with the first aspect, in some embodiments, in a case that the at least one first shared AP includes at least one third shared AP and a plurality of fourth shared APs, the MU-RTS TXS trigger frame includes a plurality of user information fields, and a user information field among the plurality of user information fields includes an allocation duration field, in which a communication range of a third shared AP among the at least one third shared AP does not overlap with a communication range of any other first shared AP, communication ranges of the plurality of fourth shared APs overlap with each other, and the at least one third shared AP and the plurality of fourth shared APs belong to the at least one first shared AP; in a case that a sum of second transmission durations corresponding to the plurality of fourth shared APs is less than the first duration, the allocation duration field indicates a third transmission duration of the TXOP shared with a third shared AP or shared with a fourth shared AP, the third transmission duration indicated by the allocation duration field is greater than or equal to the second transmission duration corresponding to the corresponding third shared AP or the second transmission duration corresponding to the corresponding fourth shared AP, and a sum of third transmission durations corresponding to the plurality of fourth shared APs is less than the first duration, and a sum of third transmission durations corresponding to the at least one third shared AP is less than the first duration, in which the user information field corresponding to the fourth shared AP further includes a fourth information field, the fourth information field indicates a start time of the TXOP shared with the fourth shared AP, and TXOPs shared by the MU-RTS TXS trigger frame with the plurality of fourth shared APs do not overlap with each other; in a case that the sum of second transmission durations corresponding to the plurality of fourth shared APs is greater than the first duration, the allocation duration field indicates a third transmission duration of the TXOP shared with a third shared AP or shared with a fifth shared AP, the fifth shared AP is determined from the plurality of fourth shared APs based on the first duration and the second transmission durations corresponding to the plurality of fourth shared APs respectively, the third transmission duration indicated by the allocation duration field is greater than or equal to the second transmission duration corresponding to the corresponding third shared AP or the second transmission duration corresponding to the corresponding fifth shared AP, and a sum of third transmission durations indicated by one or more allocation duration fields corresponding to one or more fifth shared APs respectively is less than the first duration, in which the user information field corresponding to the fifth shared AP further includes a fourth information field, the fourth information field indicates a start time of the TXOP shared with the fifth shared AP, and the start time of the TXOP shared with the fifth shared AP is determined based on a reception time of the first frame sent by the fifth shared AP and a data transmission type of the fifth shared AP, and one or more TXOPs shared by the MU-RTS TXS trigger frame with the one or more fifth shared APs respectively do not overlap with each other.

In the above embodiments, when the at least one first shared AP that requires the first AP to share the TXOP includes the at least one third shared AP whose communication ranges do not overlap with each other and the plurality of fourth shared APs whose communication ranges overlap with each other, in a case that the sum of second transmission durations corresponding to the plurality of fourth shared APs is less than the first duration, the first AP may share one or more TXOPs with the third shared AP and share one or more TXOPs with the fourth shared AP, and indicate, by the MU-RTS TXS trigger frame, the third transmission duration of the TXOP shared with the third shared AP and/or the fourth shared AP, and indicate, by the MU-RTS TXS trigger frame, the start time of the TXOP shared with the fourth shared AP. In a case that the sum of second transmission durations corresponding to the plurality of fourth shared APs is less than the first duration, the first AP may share one or more TXOPs with the at least one third shared AP and some fifth shared APs among the plurality of fourth shared APs, and indicate, by the MU-RTS TXS trigger frame, the third transmission duration of the TXOP shared with the third shared AP and/or the fifth shared AP, and indicate the start time of the TXOP shared with the fifth shared AP.

The third transmission duration of the TXOP shared with the third shared AP is less than the first duration and not less than the second transmission duration required by the corresponding third shared AP for data transmission, so that the third shared AP may complete the data transmission within the first TXOP after receiving the MU-RTS TXS trigger frame, which ensures the communication quality. Moreover, since the communication range of the third shared AP does not overlap with the communication range of the fourth shared AP or the fifth shared AP, when the third shared AP performs data transmission within the first TXOP, it will not cause interference to the data transmission of the fourth shared AP or the fifth shared AP.

The TXOPs shared with the plurality of fourth shared APs respectively do not overlap with each other, so that when the fourth shared AP performs data transmission within the first TXOP, it will not be interfered by other fourth shared APs, which may effectively improve rational utilization of a communication resource and access efficiency. The sum of third transmission durations corresponding to the plurality of fourth shared APs is less than the first duration, and the sum of third transmission durations corresponding to the plurality of fourth shared APs is not less than the second transmission duration required by the corresponding fourth shared AP for data transmission, so that the fourth shared AP may complete the data transmission within the first TXOP in a non-interfering state after receiving the MU-RTS TXS trigger frame, which ensures the communication quality.

The TXOPs shared with the one or more fifth shared APs do not overlap with each other, so that when the fifth shared AP performs data transmission within the first TXOP, it will not be interfered by other fifth shared APs, which may effectively improve rational utilization of a communication resource and access efficiency. The sum of third transmission durations corresponding to the one or more fifth shared APs is less than the first duration, and the sum of third transmission durations corresponding to the one or more fifth shared APs is not less than the second transmission duration required by the corresponding fifth shared AP for data transmission, so that the fifth shared AP may complete the data transmission within the first TXOP in a non-interfering state after receiving the MU-RTS TXS trigger frame, which ensures the communication quality.

According to a second aspect, embodiments of the present disclosure provide a communication method, performed by a second AP, including: determining, by a second AP, a first frame, in which the first frame indicates whether the second AP requires a first AP to share a TXOP within a first TXOP, and the second AP is any shared AP of the first AP; and sending, by the second AP, the first frame to enable the first AP to share the TXOP with at least one shared AP or share the TXOP with no shared AP based on the first frame sent by one or more shared APs.

In the above embodiments, the second AP, as a shared AP of the first AP, sends the first frame to the first AP, so that the first AP, according to one or more first frames sent by one or more shared APs, achieves sharing the TXOP with the at least one shared AP or share the TXOP with no shared AP, which may effectively improve efficiency of TXS.

In some embodiments in combination with the second aspect, in some embodiments, the method further includes: receiving, by the second AP, a second frame sent by the first AP, in which the second frame is configured to discover whether a shared AP of the first AP requires the first AP to share the TXOP within the first TXOP; in which the second frame includes at least one of: a first information field, in which the first information field indicates a first transmission duration remaining for the first TXOP after the first AP sends the second frame; or a second information field, in which the second information field indicates a response timeout of the second frame.

In the above embodiments, the first AP may discover, by the second frame, whether the shared AP requires the first AP to share the TXOP, and in a case that the first information field indicates the first transmission duration remaining for the first TXOP after sending the second frame, the second AP may determine whether it requires the first AP to share the TXOP according to the first transmission duration. In a case that the second frame indicates the response timeout by the second information field, the second AP may quickly respond to the second frame within the response timeout, which is beneficial to improving efficiency of discovering whether the shared AP requires the first AP to share the TXOP.

In some embodiments in combination with the second aspect, in some embodiments, sending, by the second AP, the first frame includes: sending, by the second AP, the first frame within the response timeout of the second frame, in which the first frame includes a first identifier bit, the first identifier bit indicates, by a first value, that the second AP requires the first AP to share the TXOP within the first TXOP, and the first identifier bit indicates, by a second value, that the second AP does not require the first AP to share the TXOP within the first TXOP; and the method further includes: in a case that data transmission is not required within the first TXOP, not responding, by the second AP, to the second frame within the response timeout of the second frame.

In the above embodiments, the first frame sent by the second AP may quickly indicate, by the first identifier bit, whether the second AP requires the first AP to share the TXOP, or not respond to the second frame within the response timeout to indicate that it does not require the first AP to share the TXOP, which is beneficial for the first AP to achieve fast TXS.

In some embodiments in combination with the second aspect, in some embodiments, in a case that the second AP requires the first AP to share the TXOP within the first TXOP, the first frame further includes at least one of: a third information field, in which the third information field indicates a second transmission duration required by the second AP for data transmission within the first TXOP, the second transmission duration is less than a first duration, and the first duration is a difference between the first transmission duration and the response timeout of the second frame; or a second identifier bit, in which the second identifier bit indicates, by a third value, that a data transmission type of the second AP is an emergency transmission type, and indicates, by a fourth value, that the data transmission type of the second AP is not the emergency transmission type.

In the above embodiments, when the second AP requires the first AP to share the TXOP within the first TXOP, it may indicate, in the sent first frame, the second transmission duration required by the second AP for data transmission within the first TXOP and/or the data transmission type, so that the first AP may quickly determine the TXOP to be shared for the second AP according to the above information, which improves efficiency of TXS.

In some embodiments in combination with the second aspect, in some embodiments, in a case that the second AP requires the first AP to share the TXOP within the first TXOP, the method further includes: receiving, by the second AP, an MU-RTS TXS trigger frame sent by the first AP, in which the MU-RTS TXS trigger frame includes at least one user information field, a user information field includes an allocation duration field, the allocation duration field indicates a third transmission duration of the TXOP shared with a shared AP, and the third transmission duration indicated by the allocation duration field is greater than or equal to a second transmission duration required by the corresponding shared AP for data transmission within the first TXOP; and in a case that the MU-RTS TXS trigger frame includes a user information field corresponding to the second AP, performing, by the second AP, the data transmission within the third transmission duration indicated by the allocation duration field corresponding to the second AP.

In some embodiments in combination with the second aspect, in some embodiments, in a case that the user information field corresponding to the second AP further indicates, by a fourth information field, a start time of the TXOP shared with the second AP, performing, by the second AP, the data transmission within the third transmission duration includes: performing, by the second AP, the data transmission within the third transmission duration after the start time.

In the above embodiments, in a case that the first AP shares the TXOP with the second AP, if the first AP indicates, by the MU-RTS TXS trigger frame, the third transmission duration of the TXOP shared with the second AP, the second AP may perform data transmission within the third transmission duration. If the first AP indicates, by the MU-RTS TXS trigger frame, the third transmission duration and the start time of the TXOP shared with the second AP, the second AP may perform the data transmission according to the start time and the third transmission duration, which ensures efficiency of the data transmission and a quality of the data transmission of the second AP.

According to a third aspect, embodiments of the present disclosure provide an AP, including: a transceiver module, configured to receive at least one first frame, in which a first frame among the at least one first frame is sent by a shared AP and indicates whether the corresponding shared AP requires a first AP to share a TXOP within a first TXOP; and the transceiver module is configured to share the TXOP with at least one of shared APs, or share the TXOP with no shared AP, according to the at least one first frame.

According to a fourth aspect, embodiments of the present disclosure provide an AP, including: a processing module, configured to determine a first frame, in which the first frame indicates whether a second AP requires a first AP to share a TXOP within a first TXOP, and the second AP is any shared AP of the first AP; and a transceiver module, configured to send the first frame to enable the first AP to share the TXOP with at least one shared AP or share the TXOP with no shared AP based on the first frame sent by one or more shared APs.

According to a fifth aspect, embodiments of the present disclosure provide an AP, including one or more processors, in which the AP is configured to perform the communication method provided by the first aspect and the optional implementations of the first aspect.

According to a sixth aspect, embodiments of the present disclosure provide an AP, including one or more processors, in which the AP is configured to perform the communication method provided by the second aspect and the optional implementations of the second aspect.

According to a seventh aspect, embodiments of the present disclosure provide a communication device, including one or more processors, in which the communication device may act as a first AP to perform the communication method provided by the first aspect and the optional implementations of the first aspect, or act as a second AP to perform the communication method provided by the second aspect and the optional implementations of the second aspect.

According to an eighth aspect, embodiments of the present disclosure provide a storage medium for storing instructions. When the instructions are executed on a communication device, the communication device is caused to perform the methods described in the first aspect, the second aspect, the optional implementations of the first aspect, and the optional implementations of the second aspect.

According to a ninth aspect, embodiments of the present disclosure provide a program product. When the above program product is executed by a communication device, the communication device is caused to perform the methods described in the first aspect, the second aspect, the optional implementations of the first aspect, and the optional implementations of the second aspect.

According to a tenth aspect, embodiments of the present disclosure provide a computer program. When the computer program is executed on a computer, the computer is caused to perform the methods described in the first aspect, the second aspect, the optional implementations of the first aspect, and the optional implementations of the second aspect.

According to an eleventh aspect, embodiments of the present disclosure provide a chip or a chip system. The chip or chip system includes a processing circuit, configured to perform the methods described in the first aspect, the second aspect, the optional implementations of the first aspect, and the optional implementations of the second aspect.

According to a twelfth aspect, embodiments of the present disclosure provide a communication system, including a first AP and a second AP. The first AP is configured to perform the methods described in the first aspect and the optional implementations of the first aspect, and the second AP is configured to perform the methods described in the second aspect and the optional implementations of the second aspect.

It may be understood that the AP, the communication system, the communication device, the storage medium, the program product, the computer program, the chip or the chip system are all used to perform the methods in embodiments of the present disclosure. Therefore, beneficial effects they may achieve may refer to the beneficial effects in the corresponding methods, which will not be repeated here.

Embodiments of the present disclosure provide a communication method, a device, and a storage medium. In some embodiments, terms such as communication method and method for processing information may be used interchangeably, terms such as communication device and device for processing information may be used interchangeably, and terms such as system for processing information and communication system may be used interchangeably.

Embodiments of the present disclosure are not exhaustive and only serve as illustrations of some embodiments, but not as specific limitations on the protection scope of the present disclosure. When there is no contradiction, each step in an embodiment may be implemented as an independent embodiment, and steps may be arbitrarily combined. For example, a solution obtained by removing some steps from an embodiment may also be implemented as an independent embodiment. A sequence of steps in an embodiment may be arbitrarily exchanged. In addition, optional implementations in an embodiment may be arbitrarily combined. Furthermore, different embodiments may be arbitrarily combined. For example, some or all steps of different embodiments may be arbitrarily combined, and an embodiment may be arbitrarily combined with optional implementations of other embodiments.

In various embodiments of the present disclosure, unless otherwise specified and in case of logical inconsistency, terms and/or descriptions are consistent in all embodiments and reference may be made to each other. Technical features from different embodiments may be combined to form a new embodiment based on their inherent logical relationships.

The terms used in embodiments of the present disclosure are for a purpose of describing specific embodiments only and are not intended to limit the present disclosure.

In embodiments of the present disclosure, unless otherwise specified, elements expressed in a singular form, such as "a", "an", "the", "said", "above", "aforementioned", "this" etc. may mean "one and only one" or may mean "one or more", "at least one", etc. For example, when articles such as "a", "an", or "the" are used in translation, the noun following the article may be understood in the singular form or in the plural form.

In embodiments of the present disclosure, "a plurality of" means two or more.

In some embodiments, terms such as "at least one of", "one or more", "a plurality of", "multiple", etc. may be used interchangeably.

In some embodiments, expressions such as "at least one of A or B", "A and/or B", "in a case A, in another case B", and "in response to a case A, in response to another case B" in the present disclosure, depending on situations, may include at least one of following solutions: performing A in some implementations (performing A independently of B); performing B in some implementations (performing B independently of A); selecting one of A or B for execution in some implementations (selectively performing A or B); and performing A and B in some implementations (performing both A and B). The similar principle applies when there are more parts such as A, B, C, etc.

In some embodiments, expressions such as "A or B", depending on situations, may include following technical solutions: performing A in some implementations (performing A independently of B); performing B in some implementations (performing B independently of A); and selecting one of A or B for execution in some implementations (selectively performing A or B). The similar principle applies when there are more parts such as A, B, C, etc.

The terms such as "first" and "second" added in front of other words in embodiments of the present disclosure are used solely to distinguish different described objects and do not limit a position, a sequence, a priority, a quantity, or content of the described objects. For a statement regarding the described object, reference may be made to claims or descriptions in the context of embodiments and should not constitute other restrictions due to the use of the above terms in front of other words. For example, if the described object is "field", ordinal numbers before the "field" in "first field" and "second field" do not limit a position or a sequence between fields. "First" and "second" do not limit whether modified "fields" are in a same message, nor do an order of the "first field" and the "second field." For another example, if the described object is "level", ordinal numbers before the "level" in "first level" and "second level" do not limit a priority between levels. Furthermore, a quantity of described objects is not limited by the ordinal numbers, which may be one or more. Taking "first apparatus" as an example, there may be one or more "apparatus". In addition, objects modified by different words may be the same or different. For example, if the described object is an "apparatus", "first apparatus" and "second apparatus" may be a same apparatus or different apparatuses, and their types may be the same or different. Similarly, if the described object is "information", "first information" and "second information" may be same information or different information, and their content may be the same or different.

In some embodiments, "including A", "including A", "configured to indicate A", or "carrying A" may be interpreted as directly carrying A or indirectly indicating A.

In some embodiments, terms such as "in response to...", "in response to determining...", "in a case that...", "when...", "if..." etc. may be used interchangeably.

In some embodiments, the terms such as "greater than", "greater than or equal to", "not less than", "more than", "more than or equal to", "no less than", "higher than", "higher than or equal to", "not lower than", "above", etc. may be used interchangeably. The terms such as "less than", "less than or equal to", "not greater than", "fewer than", "fewer than or equal to", "no more than", "lower than", "lower than or equal to", "not higher than", "below" etc. may also be used interchangeably.

In some embodiments, obtaining data, information, etc. shall comply with laws and regulations of a country where it is located.

In some embodiments, data, information, etc. may be obtained after agreed by a user.

In addition, each element, each row, or each column in tables of embodiments of the present disclosure may be implemented as an independent embodiment. Any combination of elements, rows, or columns may also be implemented as an independent embodiment.

In a Wi-Fi system, a device that successfully contends for a channel may reserve a period of time for data transmission, and the period of time is called a TXOP, and the device that successfully contends and reserves the TXOP is called a TXOP holder. Within one TXOP, the TXOP holder may actively send data, and other devices may only receive the data or send a response frame for received data. When the AP is the TXOP holder, it may allocate part of the time within its reserved TXOP to an associated STA. Within an allocated TXOP time, the STA may send uplink data to the AP or to other STAs with which the STA establishes a peer-to-peer (P2P) link.

The AP, that is, the TXOP holder, may act as a sharing AP to allocate its reserved TXOP to other APs. However, during one TXS process, the sharing AP may only allocate the reserved TXOP to one AP. If the sharing AP intends to allocate TXOPs to a plurality of APs, it require to perform the TXS by repeatedly sending the MU-RTS TXS trigger frame, which results in low efficiency of TXS. On the other hand, if a transmission duration of the TXOP shared by the sharing AP for different APs is a predicted value, when the reserved TXOP is shared with the plurality of APs during the TXS, how to avoid transmission interference between APs also requires to be solved.

To solve above problems, the technical solution in embodiments of the present disclosure will be described below in combination with the accompanying drawings of the present disclosure. Obviously, described embodiments are part of embodiments of the present disclosure, but not all embodiments of the present disclosure. Based on embodiments of the present disclosure, other embodiments obtained by those skilled in the art without inventive efforts are within scope of the present disclosure.

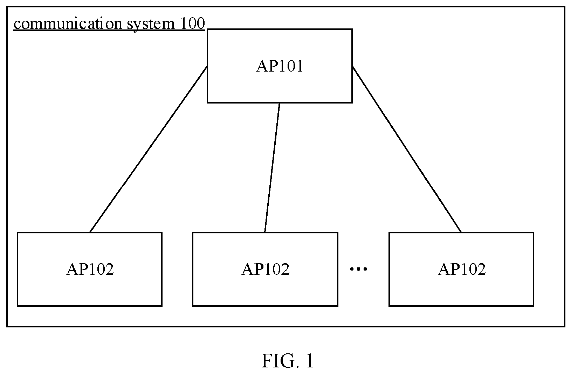

FIG. 1 is a schematic diagram of an architecture of a communication system according to embodiments of the present disclosure.

As shown in FIG. 1, a communication system 100 includes an AP 101 and at least one AP 102.

The AP 101 and the AP 102 may be independent devices, or may be devices supporting multi-link operation (MLO) technology, for example, the AP 101 and the AP 102 may be AP multi-link devices (AP MLDs).

In some embodiments, the AP 101 and the AP 102 may be terminals or network devices with a wireless fidelity chip.

The AP 101 may act as a sharing AP to share the TXOP with a shared AP (AP 102), and the AP 102 is a shared AP of the AP 101.

It may be understood that the communication system in embodiments of the present disclosure is to clearly illustrate the technical solution of embodiments of the present disclosure, and does not constitute a limitation on the technical solution in embodiments of the present disclosure. Those skilled in the art may know, with evolution of the system architecture and emergence of new service scenarios, the technical solution in embodiments of the disclosure is also applicable to similar technical problems.

The following embodiments of the present disclosure may be applied to the communication system 100 shown in FIG. 1, or to some entities, which are not limited to this. Entities in FIG. 1 are illustrative. The communication system may include all or some of the entities in FIG. 1, or may include other entities not shown in FIG. 1. The entities may be in any number and in any form. Each entity may be physical or virtual. Connection relationships between the entities are illustrative. The entities may be unconnected or may be connected. They may be connected in any manner, for example, they may be directly connected or indirectly connected, or may be connected via a wired or wireless way.

Embodiments of the present disclosure may be applied to a wireless local area network (WLAN), for example, to IEEE 802.11 system standards, such as 802.11a/b/g standard, 802.11n standard, 802.11ac standard, 802.11ax standard, or their next generations, such as 802.11bn standard, 802.11bf standard, and 802.11be standard. The 802.11be standard is also known as Wi-Fi7 or extremely high-throughput (EHT) standard or next-generation standard. Or, embodiments of the present disclosure may also be applied to wireless local area network systems, such as the Internet of Things (IoT) network or Vehicle to X (V2X) network. Of course, embodiments of the present disclosure may also be applied to other possible communication systems, such as long term evolution (LTE) system, LTE frequency division duplex (FDD) system, LTE time division duplex (TDD) system, universal mobile telecommunication system (UMTS), worldwide interoperability for microwave access (WiMAX) communication system, and future fifth generation (5G) communication system, etc.

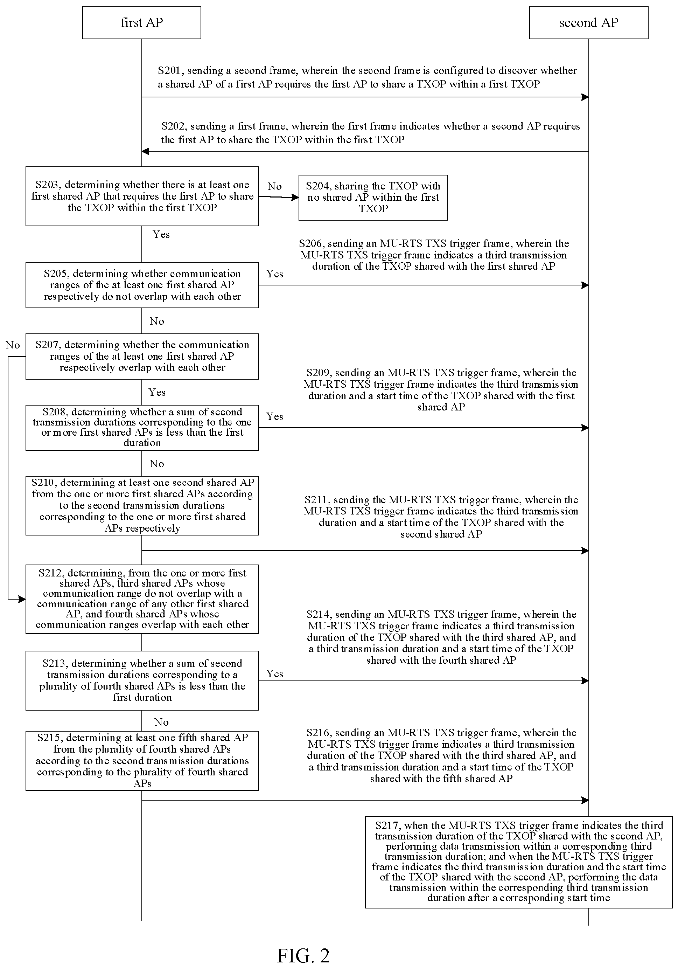

FIG. 2 is an interaction schematic diagram of a communication method according to embodiments of the present disclosure. The communication method shown in FIG. 2, including following steps at S201 to S209.

At S201, a first AP sends a second frame, in which the second frame is configured to discover whether a shared AP of the first AP requires the first AP to share a TXOP within a first TXOP.

In some embodiments, the first AP is an AP that successfully contends for a channel and obtains the TXOP, for example, the first AP may be referred to as a sharing AP. The first TXOP is a TXOP reserved by the first AP.

In some embodiments, the second frame includes at least one of: a first information field, in which the first information field indicates a first transmission duration remaining in the first TXOP after the first AP sends the second frame; or a second information field, in which the second information field indicates a response timeout of the second frame.

When the second frame includes the first information field, the first AP may inform the shared AP of the first transmission duration by the second frame, and discover whether the shared AP requires the first AP to share the TXOP within the first TXOP.

When the second frame includes the second information field, the first AP may discover whether the shared AP requires the first AP to share the TXOP within the first TXOP by the second frame, and inform the response timeout of the second frame, so that the shared AP responds to the second frame within the response timeout.

At S202, a second AP sends a first frame, in which the first frame indicates whether the second AP requires the first AP to share the TXOP within the first TXOP.

In some embodiments, the second AP is any shared AP of the first AP.

In some embodiments, after receiving the second frame, the second AP may respond to the second frame by the first frame.

The first frame sent by the second AP indicates whether the second AP requires the first AP to share the TXOP within the first TXOP.

Optionally, the first frame sent by the second AP includes a first identifier bit, the first identifier bit indicates, by a first value, that the second AP requires the first AP to share the TXOP within the first TXOP, and indicates, by a second value, that the second AP does not require the first AP to share the TXOP within the first TXOP.

The first value and the second value are different values, for example, the first value may be 1, and the second value may be 0, which is not limited herein.

The first identifier bit may be a TXS required identifier.

In some embodiments, in a case that the second frame includes the second information field for indicating the response timeout of the second frame, the second AP may send the first frame to the first AP within the response timeout of the second frame.

As an example, after the second AP receives the second frame, if the second AP requires the first AP to share the TXOP within the first TXOP, for example, if data transmission is required to be performed within the first TXOP, (within the response timeout of the second frame) the first frame is sent to the first AP, and the first identifier bit in the first frame indicates, by the first value, that the first AP is required to share the TXOP within the first TXOP.

As an example, after the second AP receives the second frame, if the second AP does not require the first AP to share the TXOP within the first TXOP, for example, if data transmission is not required to be performed within the first TXOP, (within the response timeout of the second frame) the first frame is sent to the first AP, and the first identifier bit in the first frame indicates, by the second value, that the first AP is not required to share the TXOP within the first TXOP.

In some embodiments, after the second AP receives the second frame, if the second AP does not require the first AP to share the TXOP within the first TXOP, for example, if data transmission is not required to be performed within the first TXOP, the second AP may (within the response timeout of the second frame) not respond to the second frame.

In some embodiments, when the second AP requires the first AP to share the TXOP within the first TXOP, that is, when the second AP requires to perform data transmission within the first TXOP, the first frame sent by the second AP further includes at least one of: a third information field, in which the third information field indicates a second transmission duration required by the corresponding shared AP for data transmission within the first TXOP, the second transmission duration is less than a first duration, and the first duration is a difference between the first transmission duration and the response timeout of the second frame; and a second identifier bit, in which the second identifier bit indicates, by a third value, that a data transmission type of the corresponding shared AP is an emergency transmission type, and indicates, by a fourth value, that the data transmission type of the corresponding shared AP is not the emergency transmission type.

The second transmission duration required by the second AP for the data transmission within the first TXOP is less than the first duration, and the first duration is the difference between the first transmission duration and the response timeout of the second frame. That is, a remaining duration of the first TXOP may satisfy a duration requirement of the second transmission duration indicated by the second AP by the third information field.

The third value and the fourth value are different values, for example, the third value may be 1, and the fourth value may be 0, which is not limited herein.

That is to say, in a case that the first AP receives first frames sent by a plurality of shared APs, for a shared AP that requires the first AP to share the TXOP within the first TXOP, in addition to indicating, by the first identifier bit whose identifier value is the first value, that the first AP is required to share the TXOP within the first TXOP, the first frame sent by the shared AP may also indicate, by the third information field, the second transmission duration required by the shared AP for data transmission within the first TXOP, and/or indicate, by the second identifier bit, whether the data transmission type for performing the data transmission within the first TXOP is the emergency transmission type.

At S203, the first AP determines whether there is at least one first shared AP that requires the first AP to share the TXOP within the first TXOP.

In some embodiments, after receiving the first frame(s) sent by the at least one shared AP, the first AP may determine whether the shared AP corresponding to the first frame requires the first AP to share the TXOP within the first TXOP.

For each first frame, if the first identifier bit in the first frame indicates, by the first value, that the corresponding shared AP requires the first AP to share the TXOP within the first TXOP, the first AP may determine the shared AP corresponding to the first frame as a first shared AP.

That is, in embodiments of the present disclosure, the first shared AP is a shared AP that requires the first AP to share the TXOP within the first TXOP, that is, a shared AP that requires to perform data transmission within the first TXOP.

In some embodiments, if the first AP does not receive any first frame sent by any shared AP within the response timeout, the first AP may determine that there is no shared AP that requires the first AP to share the TXOP within the first TXOP.

In some embodiments, if the first AP determines that there is no first shared AP that requires the first AP to share the TXOP within the first TXOP, S204 is executed. If the first AP determines that there is at least one first shared AP that requires the first AP to share the TXOP within the first TXOP, S205 is executed.

Determining, by the first AP, that there is no first shared AP that requires the first AP to share the TXOP within the first TXOP may include at least one of: no first frame sent by any shared AP being received within the response timeout of the second frame; and an identifier value of the first identifier bit in the first frame received within the response timeout of the second frame being the second value.

At S204, the first AP shares the TXOP with no shared AP within the first TXOP.

At S205, the first AP determines whether communication ranges of the at least one first shared AP respectively do not overlap with each other.

In some embodiments, in a case that it is determined that there is at least one first shared AP that requires the first AP to share the TXOP within the first TXOP, the first AP may determine whether the communication ranges of the at least one first shared AP respectively do not overlap with each other.

If the communication ranges of the at least one first shared AP respectively do not overlap with each other, S206 is executed. The communication ranges of the at least one first shared AP respectively not overlapping with each other includes a case that the first AP only receives one first frame with the first identifier bit being a first value, that is, there is only one first shared AP that requires the first AP to share the TXOP within the first TXOP.

If communication ranges of at least two shared APs among the at least one first shared AP overlap with each other, S207 is executed.

If basic service sets (BSSs) of two first shared APs overlap, it indicates that communication ranges of the two first shared APs overlap.

At S206, the first AP sends an MU-RTS TXS trigger frame, in which the MU-RTS TXS trigger frame indicates a third transmission duration of the TXOP shared with the first shared AP.

In some embodiments, in a case that the communication ranges of the at least one first shared AP respectively do not overlap with each other, the first AP may send a multi-user request to send the MU-RTS TXS trigger frame, and the MU-RTS TXS trigger frame is configured to share the TXOP(s) with the at least one first shared AP.

In a case that the communication ranges of the at least one first shared AP respectively do not overlap with each other, the MU-RTS TXS trigger frame includes at least one user information field, a user information field among the at least one user information field corresponds to one first shared AP, the user information field includes an allocation duration field, and the allocation duration field indicates a third transmission duration of the TXOP that the first AP shares with a first shared AP.

The third transmission duration indicated by the allocation duration field is greater than or equal to the second transmission duration required by the corresponding first shared AP for data transmission within the first TXOP.

The third transmission duration indicated by the allocation duration field is less than the first duration, that is, less than a difference between the third transmission duration remaining in the first TXOP after the first AP sends the second frame and the response timeout.

At S207, the first AP determines whether the communication ranges of the at least one first shared AP respectively overlap with each other.

In some embodiments, if the first AP determines that communication ranges of at least two shared APs among the at least one first shared AP respectively overlap with each other, the first AP may determine whether the communication ranges of the at least one first shared AP respectively overlap with each other, that is, determine that a communication range of the first shared AP overlaps with communication ranges of every other first shared AP.

If the communication ranges of the at least one first shared AP respectively overlap with each other, S208 is executed; otherwise, S212 is executed.

At S208, the first AP determines whether a sum of second transmission durations corresponding to the at least one first shared AP is less than the first duration.

In some embodiments, if the sum of second transmission durations corresponding to the at least one first shared AP is less than the first duration, S209 is executed. If the sum of second transmission durations corresponding to the at least one first shared AP is greater than (or equal to) the first duration, S210 is executed.

At S209, the first AP sends an MU-RTS TXS trigger frame, in which the MU-RTS TXS trigger frame indicates the third transmission duration and a start time of the TXOP shared with the first shared AP.

In some embodiments, in a case that the communication ranges of the at least one first shared AP respectively overlap with each other and the sum of second transmission durations corresponding to the at least one first shared AP is less than the first duration, the first AP may send the MU-RTS TXS trigger frame, and the MU-RTS TXS trigger frame is configured to share the TXOP(s) with the at least one first shared AP.

In a case that the communication ranges of the at least one first shared AP respectively overlap with each other and the sum of second transmission durations corresponding to the at least one first shared AP is less than the first duration, the MU-RTS TXS trigger frame includes at least one user information field, a user information field among the at least one user information field corresponds to one first shared AP, the user information field includes an allocation duration field and a fourth information field, the allocation duration field indicates a third transmission duration of the TXOP that the first AP shares with a first shared AP, and the fourth information field indicates a start time of the TXOP that the first AP shares with the corresponding first shared AP.

The third transmission duration indicated by the allocation duration field is greater than or equal to the second transmission duration required by the corresponding first shared AP for data transmission within the first TXOP, and a sum of third transmission durations indicated by one or more allocation duration fields is less than the first duration, that is, less than a difference between the third transmission duration remaining in the first TXOP after the first AP sends the second frame and the response timeout.

The start time of the TXOP shared with the first shared AP may be determined according to a reception time of the first frame sent by the first shared AP and/or a data transmission type corresponding to the first shared AP.

As an example, the start time of the TXOP shared with the first shared AP is positively correlated with the reception time of the first frame corresponding to the first shared AP. The earlier the reception time of the first frame corresponding to the first shared AP, the earlier the start time of the TXOP shared with the first shared AP; the later the reception time of the first frame corresponding to the first shared AP, the later the start time of the TXOP shared with the first shared AP.

As an example, the start time of the TXOP shared with the first shared AP is associated with the data transmission type of the first shared AP for data transmission within the first TXOP. The start time of the TXOP shared with a first shared AP whose data transmission type is an emergency transmission type is earlier than the start time of the TXOP shared with a first shared AP whose data transmission type is not an emergency transmission type. A start time of the TXOP shared with first shared APs with a same data transmission type may be determined according to an actual requirement.

As an example, the start time of the TXOP shared with the first shared AP is associated with the data transmission type of the first shared AP for data transmission within the first TXOP. The start time of the TXOP shared with a first shared AP whose data transmission type is an emergency transmission type is earlier than the start time of the TXOP shared with a first shared AP whose data transmission type is not an emergency transmission type. A start time of the TXOP shared with first shared APs with the same data transmission type is positively correlated with a reception time of a corresponding first frame. For the first shared APs with the same data transmission type, the earlier the reception time of the first frame, the earlier the start time of the TXOP shared with the corresponding first shared AP; and the later the reception time of the first frame, the later the start time of the TXOP shared with the corresponding first shared AP.

TXOP(s) shared by the first AP with the at least one first shared AP via the MU-RTS TXS trigger frame do not overlap with each other.

That is to say, start time(s) of the TXOP(s) shared by the first AP with the at least one first shared AP via the MU-RTS TXS trigger frame are all different, and time interval(s) each formed by the start time and the third transmission duration corresponding to the first shared AP are non-overlapping time interval(s) within the first TXOP.

At S210, the first AP determines at least one second shared AP from the at least one first shared AP according to the second transmission duration corresponding to the first shared AP.

In some embodiments, in a case that communication ranges of the at least one first shared AP overlap with each other and a sum of second transmission durations corresponding to the at least one first shared AP is greater than or equal to the first duration, it indicates that the first AP may not share the first TXOP with all the first shared APs for data transmission.

In this case, in order to allow as many first shared APs as possible to perform the data transmission within the first TXOP, the first AP may determine the at least one second shared AP from the at least one first shared AP according to the second transmission duration corresponding to the first shared AP.

The second shared AP is a shared AP with which the first AP intends to perform the TXS.

Specifically, the first AP may determine a plurality of second durations, a second duration is equal to a sum of second transmission durations of at least one first shared AP, and the first shared AP(s) corresponding to the plurality of second durations respectively are not completely the same.

That is, the first AP may determine a plurality of AP combinations, an AP combination includes at least one first shared AP, and the first shared AP(s) included in different AP combinations are not completely the same. The first AP then determines the sum of second transmission durations of all the first shared APs in the AP combination as the second duration.

The second duration is less than the first duration.

Based on this, the first AP may determine all the first shared APs corresponding to the second duration that is the longest and includes a largest number of second transmission durations as second shared AP(s).

Optionally, the first AP may also determine the at least one second shared AP from the first shared AP(s) according to the data transmission type corresponding to the first shared AP, and a specific determination method is not limited herein.

For example, if a sum of second transmission durations of first shared AP(s) whose data transmission type is the emergency transmission type is less than the first duration, the first shared AP whose data transmission type is the emergency transmission type is determined as the second shared AP. If the sum of second transmission durations of first shared AP(s) whose data transmission type is the emergency transmission type is less than the first duration, the first AP may determine a plurality of third durations, a third duration is equal to a sum of second transmission durations of at least one first shared AP whose data transmission type is the emergency transmission type, and the first shared AP(s) corresponding to the plurality of third durations respectively are not completely the same.

That is, the first AP may determine a plurality of AP combinations, the AP combination includes at least one first shared AP whose data transmission type is the emergency transmission type, and the first shared AP(s) included in different AP combinations are not completely the same. The first AP then determines the sum of second transmission durations of all the first shared APs in the AP combination as the third duration.

The third duration is less than the first duration.

Based on this, the first AP may determine all the first shared APs corresponding to the third duration that is the longest and includes a largest number of second transmission durations as second shared AP(s).

At S211, the first AP sends an MU-RTS TXS trigger frame, in which the MU-RTS TXS trigger frame indicates a third transmission duration and a start time of the TXOP shared with the second shared AP.

In some embodiments, in a case that communication ranges of the at least one first shared AP overlap with each other and a sum of second transmission durations corresponding to the at least one first shared AP is greater than (or equal to) the first duration, after the first AP determines at least one second shared AP from the at least one first shared AP, the first AP may send the MU-RTS TXS trigger frame, and the MU-RTS TXS trigger frame is configured to share the TXOP with the second shared AP.

In a case that the communication ranges of the at least one first shared AP overlap with each other and the sum of second transmission durations corresponding to the at least one first shared AP is greater than (or equal to) the first duration, the MU-RTS TXS trigger frame includes at least one user information field, a user information field corresponds to one second shared AP, the user information field includes an allocation duration field and a fourth information field, the allocation duration field indicates the third transmission duration of the TXOP that the first AP shares with the second shared AP, and the fourth information field indicates the start time of the TXOP that the first AP shares with the second shared AP.

The third transmission duration indicated by the allocation duration field is greater than or equal to the second transmission duration required by the corresponding second shared AP for data transmission within the first TXOP, and a sum of third transmission durations indicated by one or more allocation duration fields is less than the first duration, that is, less than a difference between the third transmission duration remaining in the first TXOP after the first AP sends the second frame and the response timeout.

The start time of the TXOP shared with the second shared AP may be determined based on a reception time of the first frame sent by the second shared AP and/or a data transmission type of the second shared AP.

As an example, the start time of the TXOP shared with the second shared AP is positively correlated with the reception time of the first frame corresponding to the second shared AP. The earlier the reception time of the first frame corresponding to the second shared AP, the earlier the start time of the TXOP shared with the second shared AP; and the later the reception time of the first frame corresponding to the second shared AP, the later the start time of the TXOP shared with the second shared AP.

As an example, the start time of the TXOP shared with the second shared AP is associated with the data transmission type of the second shared AP for data transmission within the first TXOP. The start time of the TXOP shared with a second shared AP whose data transmission type is an emergency transmission type is earlier than the start time of the TXOP shared with a second shared AP whose data transmission type is not an emergency transmission type. A start time of the TXOP shared with second shared APs with a same data transmission type may be determined according to an actual requirement.

As an example, the start time of the TXOP shared with the second shared AP is associated with the data transmission type of the second shared AP for data transmission within the first TXOP. The start time of the TXOP shared with the second shared AP whose data transmission type is an emergency transmission type is earlier than the start time of the TXOP shared with the second shared AP whose data transmission type is not an emergency transmission type. A start time of the TXOP shared with second shared APs with the same data transmission type is positively correlated with a reception time of a corresponding first frame. For the second shared APs with the same data transmission type, the earlier the reception time of the first frame, the earlier the start time of the TXOP shared with the corresponding second shared AP; and the later the reception time of the first frame, the later the start time of the TXOP shared with the corresponding second shared AP.

TXOP(s) shared by the first AP with the at least one second shared AP by the MU-RTS TXS trigger frame do not overlap with each other.

That is to say, start time(s) of the TXOP(s) shared by the first AP with the at least one second shared AP by the MU-RTS TXS trigger frame are all different, and time interval(s) each formed by the start time and the third transmission duration corresponding to the second shared AP are non-overlapping time interval(s) within the first TXOP.

At S212, the first AP determines, from the at least one first shared AP, a third shared AP whose communication range do not overlap with a communication range of any other first shared AP, and fourth shared APs whose communication ranges overlap with each other.

In some embodiments, in a case that communication ranges of at least two shared APs among the at least one first shared AP overlap with each other, and when there is also at least one shared AP among the at least one first shared AP whose communication range does not overlap with the communication range of any other first shared AP, the first AP may determine the first shared AP whose communication range does not overlap with the communication range of any other first shared AP as the third shared AP, and determine first shared APs whose communication ranges overlap with each other as the fourth shared APs.

At S213, the first AP determines whether a sum of second transmission durations corresponding to the fourth shared APs is less than the first duration.

In some embodiments, after the first AP determines, from the at least one first shared AP, the third shared AP whose communication range does not overlap with the communication range of any other first shared AP, and the fourth shared APs whose communication ranges overlap with each other, it may determine whether the sum of second transmission durations corresponding to the fourth shared APs is less than the first duration.

If the sum of second transmission durations corresponding to the fourth shared APs is less than the first duration, S214 is executed; otherwise, S215 is executed.

At S214, the first AP sends an MU-RTS TXS trigger frame, in which the MU-RTS TXS trigger frame indicates a third transmission duration of the TXOP shared with the third shared AP, and a third transmission duration and a start time of the TXOP shared with the fourth shared AP.

In some embodiments, in a case that, among the at least one first shared AP, there are third shared AP whose communication range does not overlap with the communication range of any other first shared AP and fourth shared APs whose communication ranges overlap with each other, and the sum of second transmission durations corresponding to the fourth shared APs is less than the first duration, the first AP may send the MU-RTS TXS trigger frame, and the MU-RTS TXS trigger frame is configured to share the TXOP(s) with the third shared AP and to share the TXOP(s) with the fourth shared AP.

In a case that, among the at least one first shared AP, there are third shared AP whose communication range does not overlap with the communication range of any other first shared AP and the fourth shared APs whose communication ranges overlap with each other, and the sum of second transmission durations corresponding to the fourth shared APs is less than the first duration, the MU-RTS TXS trigger frame includes at least one user information field, and a user information field among the at least one user information field corresponds to one third shared AP or one fourth shared AP.

The user information field includes an allocation duration field, and the allocation duration field indicates the third transmission duration of the TXOP that the first AP shares with the third shared AP or the fourth shared AP.

The third transmission duration indicated by the allocation duration field is greater than or equal to the second transmission duration corresponding to the corresponding third shared AP or the corresponding fourth shared AP.

A sum of third transmission durations indicated by the allocation duration fields corresponding to the fourth shared APs is less than the first duration.

A sum of third transmission durations indicated by the allocation duration field(s) corresponding to the at least one third shared AP is less than the first duration.

The user information field corresponding to the fourth shared AP further includes a fourth information field, and the fourth information field indicates a start time of the TXOP shared with the fourth shared AP.

The start time of the TXOP shared with the fourth shared AP may be determined according to a reception time of the first frame sent by the fourth shared AP and/or a data transmission type of the fourth shared AP.

As an example, the start time of the TXOP shared with the fourth shared AP is positively correlated with the reception time of the first frame corresponding to the fourth shared AP. The earlier the reception time of the first frame corresponding to the fourth shared AP, the earlier the start time of the TXOP shared with the fourth shared AP; and the later the reception time of the first frame corresponding to the fourth shared AP, the later the start time of the TXOP shared with the fourth shared AP.

As an example, the start time of the TXOP shared with the fourth shared AP is associated with the data transmission type of the fourth shared AP for data transmission within the first TXOP. The start time of the TXOP shared with a fourth shared AP whose data transmission type is the emergency transmission type is earlier than the start time of the TXOP shared with a fourth shared AP whose data transmission type is not the emergency transmission type. The start time of the TXOP shared with fourth shared APs with a same data transmission type may be determined according to an actual requirement.

As an example, the start time of the TXOP shared with the fourth shared AP is associated with the data transmission type of the fourth shared AP for performing data transmission within the first TXOP. The start time of the TXOP shared with a fourth shared AP whose data transmission type is an emergency transmission type is earlier than the start time of the TXOP shared with a fourth shared AP whose data transmission type is not an emergency transmission type. A start time of the TXOP shared with fourth shared APs with the same data transmission type is positively correlated with a reception time of a corresponding first frame. For the fourth shared APs with the same data transmission type, the earlier the reception time of the first frame, the earlier the start time of the TXOP shared with the corresponding fourth shared AP; and the later the reception time of the first frame, the later the start time of the TXOP shared with the corresponding fourth shared AP.

TXOPs shared by the first AP with the fourth shared APs by the MU-RTS TXS trigger frame do not overlap with each other.

That is to say, start times of the TXOPs shared by the first AP with the plurality of fourth shared APs by the MU-RTS TXS trigger frame are all different, and time intervals each formed by the start time and the third transmission duration corresponding to the fourth shared AP are non-overlapping time intervals within the first TXOP.

At S215, the first AP determines at least one fifth shared AP from the fourth shared APs according to the second transmission duration corresponding to the fourth shared AP.

In some embodiments, in a case that communication ranges of the fourth shared APs overlap with each other and a sum of second transmission durations corresponding to the fourth shared APs is greater than or equal to the first duration, it indicates that the first AP may not share the first TXOP with all the fourth shared APs for data transmission.

In this case, in order to allow as many fourth shared APs as possible to perform the data transmission within the first TXOP, the first AP may determine the at least one fifth shared AP from the fourth shared APs according to the second transmission duration corresponding to the fourth shared AP.

The fifth shared AP is a fourth shared AP with which the first AP intends to perform the TXS.

Specifically, the first AP may determine a plurality of fourth durations, a fourth duration is equal to a sum of second transmission durations of at least one fourth shared AP, and the fourth shared AP(s) corresponding to the plurality of fourth durations respectively are not completely the same.

That is, the first AP may determine a plurality of AP combinations, an AP combination includes at least one fourth shared AP, and the fourth shared AP(s) included in different AP combinations are not completely the same. The first AP then determines the sum of second transmission durations of all the fourth shared APs in the AP combination as the fourth duration.

The fourth duration is less than the first duration.

Based on this, the first AP may determine all the fourth shared APs corresponding to a fourth duration that is the longest and includes a largest number of second transmission durations as fifth shared AP(s).

Optionally, the first AP may also determine the at least one fifth shared AP from the fourth shared APs according to the data transmission type corresponding to the fourth shared AP, and a specific determination method is not limited herein.

For example, if a sum of second transmission durations of fourth shared AP(s) whose data transmission type is the emergency transmission type is less than the first duration, the fourth shared AP whose data transmission type is the emergency transmission type is determined as the fifth shared AP. If the sum of second transmission durations of fourth shared AP(s) whose data transmission type is the emergency transmission type is less than the first duration, the first AP may determine a plurality of third durations, a third duration is equal to a sum of second transmission durations of at least one fourth shared AP whose data transmission type is the emergency transmission type, and fourth shared AP(s) corresponding to the plurality of third durations respectively are not completely the same.

That is, the first AP may determine a plurality of AP combinations, the AP combination includes at least one fourth shared AP whose data transmission type is the emergency transmission type, and the fourth shared AP(s) included in different AP combinations are not completely the same. The first AP then determines the sum of second transmission durations of all the fourth shared APs in the AP combination as a fifth duration.

The fifth duration is less than the first duration.

Based on this, the first AP may determine all the fourth shared APs corresponding to the fifth duration that is the longest and includes a largest number of second transmission durations as fifth shared AP(s).

At S216, the first AP sends an MU-RTS TXS trigger frame, in which the MU-RTS TXS trigger frame indicates a third transmission duration of the TXOP shared with the third shared AP, and a third transmission duration and a start time of the TXOP shared with the fifth shared AP.

In some embodiments, in a case that, among the at least one first shared AP, there are third shared AP whose communication range does not overlap with the communication range of any other first shared AP and fourth shared APs whose communication ranges overlap with each other, and the sum of second transmission durations corresponding to the plurality of fourth shared APs is greater than or equal to the first duration, the first AP may send the MU-RTS TXS trigger frame, and the MU-RTS TXS trigger frame is configured to share the TXOP with the third shared AP and to share the TXOP with the fifth shared AP.

In a case that, among the at least one first shared AP, there are third shared AP whose communication range does not overlap with the communication range of any other first shared AP and the fourth shared APs whose communication ranges overlap with each other, and the sum of second transmission durations corresponding to the fourth shared APs is greater than or equal to the first duration, the MU-RTS TXS trigger frame includes at least one user information field, and a user information field corresponds to one third shared AP or one fifth shared AP.

The user information field includes an allocation duration field, and the allocation duration field indicates the third transmission duration of the TXOP that the first AP shares with the third shared AP or the one fifth shared AP.

The third transmission duration indicated by the allocation duration field is greater than or equal to the second transmission duration corresponding to the corresponding third shared AP or the corresponding fifth shared AP.

A sum of third transmission durations indicated by the allocation duration field(s) corresponding to the at least one fifth shared AP is less than the first duration.

A sum of third transmission durations indicated by the allocation duration field(s) corresponding to the at least one third shared AP is less than the first duration.

The user information field corresponding to the fifth shared AP further includes a fourth information field, and the fourth information field indicates a start time of the TXOP shared with one fifth shared AP.

The start time of the TXOP shared with the fifth shared AP may be determined based on a reception time of the first frame sent by the fifth shared AP and/or a data transmission type of the fifth shared AP.

As an example, the start time of the TXOP shared with the fifth shared AP is positively correlated with the reception time of the first frame corresponding to the fifth shared AP. The earlier the reception time of the first frame corresponding to the fifth shared AP, the earlier the start time of the TXOP shared with the fifth shared AP; and the later the reception time of the first frame corresponding to the fifth shared AP, the later the start time of the TXOP shared with the fifth shared AP.

As an example, the start time of the TXOP shared with the fifth shared AP is associated with the data transmission type of the fifth shared AP for data transmission within the first TXOP. The start time of the TXOP shared with a fifth shared AP whose data transmission type is an emergency transmission type is earlier than the start time of the TXOP shared with a fifth shared AP whose data transmission type is not an emergency transmission type. A start time of the TXOP shared with fifth shared APs with a same data transmission type may be determined according to an actual requirement.

As an example, the start time of the TXOP shared with the fifth shared AP is associated with the data transmission type of the fifth shared AP for data transmission within the first TXOP. The start time of the TXOP shared with the fifth shared AP whose data transmission type is an emergency transmission type is earlier than the start time of the TXOP shared with the fifth shared AP whose data transmission type is not an emergency transmission type. A start time of the TXOP shared with fifth shared APs with the same data transmission type is positively correlated with a reception time of a corresponding first frame. For the fifth shared APs with the same data transmission type, the earlier the reception time of the first frame, the earlier the start time of the TXOP shared with the corresponding fifth shared AP; and the later the reception time of the first frame, the later the start time of the TXOP shared with the corresponding fifth shared AP.

TXOP(s) shared by the first AP with the at least one fifth shared AP by the MU-RTS TXS trigger frame do not overlap with each other.

That is to say, start time(s) of the TXOP(s) shared by the first AP with the at least one fifth shared AP by the MU-RTS TXS trigger frame are all different, and time interval(s) each formed by the start time and the third transmission duration corresponding to the fifth shared AP are non-overlapping time interval(s) within the first TXOP.

At S217, when the MU-RTS TXS trigger frame indicates the third transmission duration of the TXOP shared with the second AP, the second AP performs data transmission within the corresponding third transmission duration; and when the MU-RTS TXS trigger frame indicates the third transmission duration and the start time of the TXOP shared with the second AP, the second AP performs the data transmission within the corresponding third transmission duration after the corresponding start time.

In some embodiments, after receiving the MU-RTS TXS trigger frame sent by the first AP, the second AP may determine whether the MU-RTS TXS trigger frame includes a user information field corresponding to the second AP.

When the MU-RTS TXS trigger frame includes the user information field corresponding to the second AP, and the user information field corresponding to the second AP only indicates the third transmission duration of the TXOP shared with the second AP by the allocation duration field, the second AP may perform the data transmission within the corresponding third transmission duration after receiving the MU-RTS TXS trigger frame, and not perform the data transmission outside the third transmission duration. Alternatively, after receiving the trigger frame sent by the first AP for indicating the second AP for data transmission, the second AP may perform the data transmission within the third transmission duration after receiving the trigger frame, and stop the data transmission after the third transmission duration ends.

When the MU-RTS TXS trigger frame includes the user information field corresponding to the second AP, and the user information field corresponding to the second AP further indicates, by the fourth information field, the start time of the TXOP shared with the second AP, the second AP performs the data transmission within the third transmission duration after that start time (allocated by the first AP to the second AP), and stops the data transmission after the third transmission duration ends.

The communication method in embodiments of the present disclosure may include at least one of above steps and embodiments. For example, any one of S201 to S217 may be implemented as an independent embodiment, and any combination of S201 to S217 may be implemented as an independent embodiment, which is not limited herein.

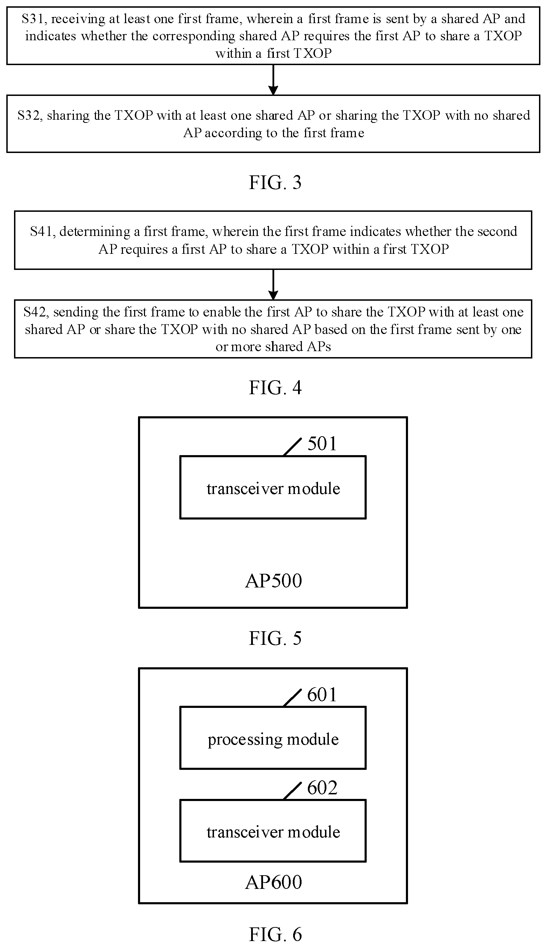

FIG. 3 is a first flowchart of a communication method according to embodiments of the present disclosure. As shown in FIG. 3, the method is performed by a first AP, including following steps at S31 to S32.

At S31, at least one first frame is received, in which a first frame among the at least one first frame is sent by a shared AP and indicates whether the corresponding shared AP requires the first AP to share a TXOP within a first TXOP.

In some embodiments, the first AP is an AP that successfully contends for a channel and obtains the TXOP, for example, the first AP may be referred to as a sharing AP. The first TXOP is a TXOP reserved by the first AP.

In some embodiments, the first frame sent by the shared AP indicates whether the corresponding shared AP requires the first AP to share the TXOP within the first TXOP.

The first frame sent by the shared AP includes a first identifier bit, the first identifier bit indicates, by a first value, that the corresponding shared AP requires the first AP to share the TXOP within the first TXOP, and the first identifier bit indicates, by a second value, that the corresponding shared AP does not require the first AP to share the TXOP within the first TXOP.

The first value and the second value are different values, for example, the first value may be 1, and the second value may be 0, which is not limited herein.

The first identifier bit may be a TXS required identifier.

In some embodiments, before receiving the first frame, the first AP may send a second frame to the shared AP, in which the second frame is configured to discover whether the shared AP of the first AP requires the first AP to share the TXOP within the first TXOP.

The second frame includes at least one of: a first information field, in which the first information field indicates a first transmission duration remaining in the first TXOP after the first AP sends the second frame; or a second information field, in which the second information field indicates a response timeout of the second frame.

When the second frame includes the first information field, the first AP may inform the shared AP of the first transmission duration by the second frame, and discover whether the shared AP requires the first AP to share the TXOP within the first TXOP.

When the second frame includes the second information field, the first AP may discover whether the shared AP requires the first AP to share the TXOP within the first TXOP by the second frame, and inform the response timeout of the second frame, so that the shared AP responds to the second frame within the response timeout.

In some embodiments, after sending the second frame, the first AP may receive, within the response timeout, the first frame sent by the shared AP for responding to the second frame.

As an example, after the first AP receives the first frame sent by any shared AP, the first identifier bit in the first frame may indicate, by the first value, that the shared AP requires the first AP to share the TXOP within the first TXOP, that is, indicate that the shared AP requires to perform data transmission within the first TXOP; and the first identifier bit in the first frame may indicate, by the second value, that the shared AP does not require the first AP to share the TXOP within the first TXOP, that is, indicate that the shared AP does not require to perform data transmission within the first TXOP.

In some embodiments, for any shared AP, if the first AP does not receive the first frame sent by the shared AP within the response timeout of the second frame, the first AP may determine that the shared AP does not require the first AP to share the TXOP within the first TXOP, that is, the shared AP does not require to perform data transmission within the first TXOP.

In some embodiments, the first frame sent by the shared AP that requires the first AP to share the TXOP within the first TXOP further includes: a third information field, in which the third information field indicates a second transmission duration required by the corresponding shared AP for data transmission within the first TXOP, the second transmission duration is less than a first duration, and the first duration is a difference between the first transmission duration and the response timeout of the second frame; and a second identifier bit, in which the second identifier bit indicates, by a third value, that a data transmission type of the corresponding shared AP is an emergency transmission type, and indicates, by a fourth value, that the data transmission type of the corresponding shared AP is not the emergency transmission type.

The second transmission duration required by the shared AP for the data transmission within the first TXOP is less than the first duration, and the first duration is the difference between the first transmission duration and the response timeout of the second frame. That is, a remaining duration of the first TXOP may satisfy a duration requirement of the second transmission duration indicated by a corresponding shared AP by the third information field.

The third value and the fourth value are different values, for example, the third value may be 1, and the fourth value may be 0, which is not limited herein.

At S32, the TXOP is shared with at least one shared AP or the TXOP shared with no shared AP according to the first frame.

In some embodiments, the first AP may determine whether there is at least one first shared AP that requires the first AP to share the TXOP within the first TXOP.

In some embodiments, after receiving first frames sent by the at least one shared AP, the first AP may determine whether the shared AP corresponding to the first frame requires the first AP to share the TXOP within the first TXOP.

For each first frame, if the first identifier bit in the first frame indicates, by the first value, that the corresponding shared AP requires the first AP to share the TXOP within the first TXOP, the first AP may determine the shared AP corresponding to the first frame as a first shared AP.

That is, in embodiments of the present disclosure, the first shared AP is a shared AP that requires the first AP to share the TXOP within the first TXOP, that is, a shared AP that requires to perform data transmission within the first TXOP.

In some embodiments, if the first AP does not receive any first frame sent by any shared AP within the response timeout, the first AP may determine that there is no shared AP that requires the first AP to share the TXOP within the first TXOP.

In some embodiments, when there is no first shared AP that requires the first AP to share the TXOP within the first TXOP, the first AP does share the TXOP with no shared AP within the first TXOP.

Determining, by the first AP, that there is no first shared AP that requires the first AP to share the TXOP within the first TXOP may include at least one of: no first frame sent by any shared AP being received within the response timeout of the second frame; or an identifier value of the first identifier bit in the first frame received within the response timeout of the second frame being a second value.

In some embodiments, when there is at least one first shared AP that requires the first AP to share the TXOP within the first TXOP, and communication ranges of the at least one first shared AP do not overlap with each other, the first AP may send an MU-RTS TXS trigger frame, in which the MU-RTS TXS trigger frame is configured to share the TXOP with the first shared AP.

In this case, the MU-RTS TXS trigger frame includes at least one user information field, a user information field corresponds to one first shared AP, the user information field includes an allocation duration field, and the allocation duration field indicates a third transmission duration of the TXOP that the first AP shares with the first shared AP.

The third transmission duration indicated by the allocation duration field is greater than or equal to the second transmission duration required by the corresponding first shared AP for data transmission within the first TXOP.

The third transmission duration indicated by the allocation duration field is less than the first duration, that is, less than a difference between the third transmission duration remaining in the first TXOP after the first AP sends the second frame and the response timeout.

The communication ranges of the at least one first shared AP not overlapping with each other includes a case that the first AP only receives one first frame with the first identifier bit being a first value, that is, there is only one first shared AP that requires the first AP to share the TXOP within the first TXOP.

In some embodiments, when there is at least one first shared AP that requires the first AP to share the TXOP within the first TXOP, and the communication ranges of the at least one first shared AP respectively overlap with each other, if a sum of second transmission durations corresponding to the at least one first shared AP is less than the first duration, the first AP may send an MU-RTS TXS trigger frame, in which the MU-RTS TXS trigger frame is configured to share the TXOP(s) with the at least one first shared AP.

In this case, the MU-RTS TXS trigger frame includes at least one user information field, a user information field corresponds to one first shared AP, the user information field includes an allocation duration field and a fourth information field, the allocation duration field indicates a third transmission duration of the TXOP that the first AP shares with the first shared AP, and the fourth information field indicates a start time of the TXOP that the first AP shares with the first shared AP.

The third transmission duration indicated by the allocation duration field is greater than or equal to the second transmission duration required by the corresponding first shared AP for data transmission within the first TXOP, and a sum of third transmission durations indicated by one or more allocation duration fields is less than the first duration, that is, less than a difference between the third transmission duration remaining in the first TXOP after the first AP sends the second frame and the response timeout.

TXOP(s) shared by the first AP with the at least one first shared AP by the MU-RTS TXS trigger frame do not overlap with each other.

That is to say, start time(s) of the TXOP(s) shared by the first AP with the at least one first shared AP via the MU-RTS TXS trigger frame are all different, and time interval(s) each formed by the start time and the third transmission duration corresponding to the first shared AP are non-overlapping time interval(s) within the first TXOP.

In some embodiments, when there is at least one first shared AP that requires the first AP to share the TXOP within the first TXOP, and the communication ranges of at least one shared AP respectively overlap with each other, if the sum of second transmission durations corresponding to the first shared APs is greater than or equal to the first duration, it indicates that the first AP may not share the first TXOP to all the first shared APs for data transmission. To enable as many first shared APs as possible to perform the data transmission within the first TXOP, the first AP may determine the at least one second shared AP from the at least one first shared AP according to the second transmission duration corresponding to the first shared AP.

The second shared AP is a shared AP with which the first AP intends to perform the TXS.

Specifically, the first AP may determine a plurality of second durations, a second duration is equal to a sum of second transmission durations of at least one first shared AP, and the first shared AP(s) corresponding to the plurality of second durations respectively are not completely the same.

That is, the first AP may determine a plurality of AP combinations, an AP combination includes at least one first shared AP, and the first shared AP(s) included in different AP combinations are not completely the same. The first AP then determines the sum of second transmission durations of all the first shared APs in the AP combination as the second duration.

The second duration is less than the first duration.

Based on this, the first AP may determine all the first shared APs corresponding to the second duration that is the longest and includes a largest number of second transmission durations as second shared AP(s).

Optionally, the first AP may also determine the at least one second shared AP from the first shared AP(s) according to the data transmission type corresponding to the first shared AP, and a specific determination method is not limited herein.

For example, if a sum of second transmission durations of first shared AP(s) whose data transmission type is the emergency transmission type is less than the first duration, the first shared AP whose data transmission type is the emergency transmission type is determined as the second shared AP. If the sum of second transmission durations of first shared AP(s) whose data transmission type is the emergency transmission type is less than the first duration, the first AP may determine a plurality of third durations, a third duration is equal to a sum of second transmission durations of at least one first shared AP whose data transmission type is the emergency transmission type, and the first shared AP(s) corresponding to the plurality of third durations respectively are not completely the same.

That is, the first AP may determine a plurality of AP combinations, the AP combination includes at least one first shared AP whose data transmission type is the emergency transmission type, and the first shared AP(s) included in different AP combinations are not completely the same. The first AP then determines the sum of second transmission durations of all the first shared APs in the AP combination as the third duration.

The third duration is less than the first duration.

Based on this, the first AP may determine all the first shared APs corresponding to the third duration that is the longest and includes a largest number of second transmission durations as second shared AP(s).

Further, the first AP may send an MU-RTS TXS trigger frame, and the MU-RTS TXS trigger frame is configured to share the TXOP with the second shared AP.

In this case, the MU-RTS TXS trigger frame includes at least one user information field, a user information field corresponds to one second shared AP, the user information field includes an allocation duration field and a fourth information field, the allocation duration field indicates a third transmission duration of the TXOP that the first AP shares with the second shared AP, and the fourth information field indicates a start time of the TXOP that the first AP shares with the second shared AP.

The third transmission duration indicated by the allocation duration field is greater than or equal to the second transmission duration required by the corresponding second shared AP for data transmission within the first TXOP, and a sum of third transmission durations indicated by one or more allocation duration fields is less than the first duration, that is, less than a difference between the third transmission duration remaining in the first TXOP after the first AP sends the second frame and the response timeout.

TXOP(s) shared by the first AP with the at least one second shared AP by the MU-RTS TXS trigger frame do not overlap with each other.

That is to say, start time(s) of the TXOP(s) shared by the first AP with the at least one second shared AP by the MU-RTS TXS trigger frame are all different, and time interval(s) each formed by the start time and the third transmission duration corresponding to the second shared AP are non-overlapping time interval(s) within the first TXOP.

In some embodiments, when there is at least one first shared AP that requires the first AP to share the TXOP within the first TXOP, and, among the at least one first shared AP, there are third shared AP whose communication range does not overlap with the communication range of any other first shared AP and fourth shared APs whose communication ranges overlap with each other, and the sum of second transmission durations corresponding to the fourth shared APs is less than the first duration, the first AP may send the MU-RTS TXS trigger frame, and the MU-RTS TXS trigger frame is configured to share the TXOP with the third shared AP and the fourth shared AP.

In this case, the MU-RTS TXS trigger frame includes at least one user information field, and a user information field corresponds to one third shared AP or one fourth shared AP.

The user information field includes an allocation duration field, and the allocation duration field indicates the third transmission duration of the TXOP that the first AP shares with the third shared AP or the fourth shared AP.

The third transmission duration indicated by the allocation duration field is greater than or equal to the second transmission duration corresponding to the corresponding third shared AP or the corresponding fourth shared AP.

A sum of third transmission durations indicated by the allocation duration fields corresponding to the fourth shared APs is less than the first duration.

A sum of third transmission durations indicated by the allocation duration field(s) corresponding to the at least one third shared AP is less than the first duration.

The user information field corresponding to the fourth shared AP further includes a fourth information field, and the fourth information field indicates a start time of the TXOP shared with one fourth shared AP.

TXOPs shared by the first AP with the fourth shared APs by the MU-RTS TXS trigger frame do not overlap with each other.

That is to say, start times of the TXOPs shared by the first AP with the plurality of fourth shared APs by the MU-RTS TXS trigger frame are all different, and time intervals each formed by the start time and the third transmission duration corresponding to the fourth shared AP are non-overlapping time intervals within the first TXOP.

In some embodiments, when there is at least one first shared AP that requires the first AP to share the TXOP within the first TXOP, and, among the at least one first shared AP, there are third shared AP whose communication range does not overlap with the communication range of any other first shared AP and the fourth shared APs whose communication ranges overlap with each other, and the sum of second transmission durations corresponding to the fourth shared APs is greater than or equal to the first duration, it indicates that the first AP may not share the first TXOP with all the fourth shared APs for data transmission. To enable as many fourth shared APs as possible to perform the data transmission within the first TXOP, the first AP may determine at least one fifth shared AP from the fourth shared APs according to the second transmission duration corresponding to the fourth shared AP.

The fifth shared AP is a fourth shared AP with which the first AP intends to perform the TXS.

Specifically, the first AP may determine a plurality of fourth durations, a fourth duration is equal to a sum of second transmission durations of at least one fourth shared AP, and the fourth shared AP(s) corresponding to the plurality of fourth durations respectively are not completely the same.

That is, the first AP may determine a plurality of AP combinations, an AP combination includes at least one fourth shared AP, and the fourth shared AP(s) included in different AP combinations are not completely the same. The first AP then determines the sum of second transmission durations of all the fourth shared APs in the AP combination as the fourth duration.

The fourth duration is less than the first duration.

Based on this, the first AP may determine all the fourth shared APs corresponding to a fourth duration that is the longest and includes a largest number of second transmission durations as fifth shared AP(s).

Optionally, the first AP may also determine the at least one fifth shared AP from the fourth shared APs according to the data transmission type corresponding to the fourth shared AP, and a specific determination method is not limited herein.

For example, if a sum of second transmission durations of fourth shared AP(s) whose data transmission type is the emergency transmission type is less than the first duration, the fourth shared AP whose data transmission type is the emergency transmission type is determined as the fifth shared AP. If the sum of second transmission durations of fourth shared AP(s) whose data transmission type is the emergency transmission type is less than the first duration, the first AP may determine a plurality of third durations, a third duration is equal to a sum of second transmission durations of at least one fourth shared AP whose data transmission type is the emergency transmission type, and fourth shared AP(s) corresponding to the plurality of third durations respectively are not completely the same.

That is, the first AP may determine a plurality of AP combinations, the AP combination includes at least one fourth shared AP whose data transmission type is the emergency transmission type, and the fourth shared AP(s) included in different AP combinations are not completely the same. The first AP then determines the sum of second transmission durations of all the fourth shared APs in the AP combination as a fifth duration.

The fifth duration is less than the first duration.

Based on this, the first AP may determine all the fourth shared APs corresponding to the fifth duration that is the longest and includes a largest number of second transmission durations as fifth shared AP(s).

Further, the first AP may send the MU-RTS TXS trigger frame, and the MU-RTS TXS trigger frame is configured to share the TXOP with the third shared AP and the fifth shared AP.

In this case, the MU-RTS TXS trigger frame includes at least one user information field, and a user information field corresponds to one third shared AP or one fifth shared AP.

The user information field includes an allocation duration field, and the allocation duration field indicates the third transmission duration of the TXOP that the first AP shares with the third shared AP or the one fifth shared AP.

The third transmission duration indicated by the allocation duration field is greater than or equal to the second transmission duration corresponding to the corresponding third shared AP or the corresponding fifth shared AP.

A sum of third transmission durations indicated by the allocation duration field(s) corresponding to the at least one fifth shared AP is less than the first duration.

A sum of third transmission durations indicated by the allocation duration field(s) corresponding to the at least one third shared AP is less than the first duration.

The user information field corresponding to the fifth shared AP further includes a fourth information field, and the fourth information field indicates a start time of the TXOP shared with one fifth shared AP.

TXOP(s) shared by the first AP with the at least one fifth shared AP by the MU-RTS TXS trigger frame do not overlap with each other.

That is to say, start time(s) of the TXOP(s) shared by the first AP with the at least one fifth shared AP by the MU-RTS TXS trigger frame are all different, and time interval(s) each formed by the start time and the third transmission duration corresponding to the fifth shared AP are non-overlapping time interval(s) within the first TXOP.

The communication method in embodiments of the present disclosure may include at least one of above steps and embodiments. For example, any one of S31 to S32 may be implemented as an independent embodiment, and S31 to S32 may be implemented as an independent embodiment, which is not limited herein.

FIG. 4 is a flowchart of a communication method according to embodiments of the present disclosure. As shown in FIG. 4, the method is performed by a second AP, including following steps at S41 to S42.

At S41, a first frame is determined, in which the first frame indicates whether the second AP requires a first AP to share a TXOP within a first TXOP.

In some embodiments, the first AP is an AP that successfully contends for a channel and obtains the TXOP, for example, the first AP may be referred to as a sharing AP. The first TXOP is a TXOP reserved by the first AP.

In some embodiments, the second AP is any shared AP of the first AP.

In some embodiments, the first frame sent by the second AP includes a first identifier bit, the first identifier bit indicates, by a first value, that the second AP requires the first AP to share the TXOP within the first TXOP, and the first identifier bit indicates, by a second value, that the second AP does not require the first AP to share the TXOP within the first TXOP.

The first value and the second value are different values, for example, the first value may be 1, and the second value may be 0, which is not limited herein.

The first identifier bit may be a TXS required identifier.

In some embodiments, after receiving a second frame sent by the first AP, the second AP may respond to the second frame with the first frame.

The second frame is configured to discover whether the shared AP requires the first AP to share the TXOP within the first TXOP.

The second frame includes at least one of: a first information field, in which the first information field indicates a first transmission duration remaining in the first TXOP after the first AP sends the second frame; or a second information field, in which the second information field indicates a response timeout of the second frame.

When the second frame includes the first information field, the first AP may inform the shared AP of the first transmission duration by the second frame, and discover whether the shared AP requires the first AP to share the TXOP within the first TXOP.

When the second frame includes the second information field, the first AP may discover whether the shared AP requires the first AP to share the TXOP within the first TXOP by the second frame, and inform the response timeout of the second frame, so that the shared AP responds to the second frame within the response timeout.

In some embodiments, in a case that the second frame includes a second information field for indicating a response timeout of the second frame, the second AP may send the first frame to the first AP within the response timeout of the second frame.

As an example, after the second AP receives the second frame, if the second AP requires the first AP to share the TXOP within the first TXOP, for example, if data transmission is required to be performed within the first TXOP, (within the response timeout of the second frame) the first frame is sent to the first AP, and the first identifier bit in the first frame indicates, by the first value, that the first AP is required to share the TXOP within the first TXOP.

As an example, after the second AP receives the second frame, if the second AP does not require the first AP to share the TXOP within the first TXOP, for example, if data transmission is not required to be performed within the first TXOP, (within the response timeout of the second frame) the first frame is sent to the first AP, and the first identifier bit in the first frame indicates, by the second value, that the first AP is not required to share the TXOP within the first TXOP.

In some embodiments, after the second AP receives the second frame, if the second AP does not require the first AP to share the TXOP within the first TXOP, for example, if data transmission is not required to be performed within the first TXOP, the second AP may (within the response timeout of the second frame) not respond to the second frame.

In some embodiments, when the second AP requires the first AP to share the TXOP within the first TXOP, that is, when the second AP requires to perform data transmission within the first TXOP, the first frame sent by the second AP further includes at least one of: a third information field, in which the third information field indicates a second transmission duration required by the corresponding shared AP for data transmission within the first TXOP, the second transmission duration is less than a first duration, and the first duration is a difference between the first transmission duration and the response timeout of the second frame; and a second identifier bit, in which the second identifier bit indicates, by a third value, that a data transmission type of the corresponding shared AP is an emergency transmission type, and indicates, by a fourth value, that the data transmission type of the corresponding shared AP is not the emergency transmission type.

The second transmission duration required by the second AP for the data transmission within the first TXOP is less than the first duration, and the first duration is the difference between the first transmission duration and the response timeout of the second frame. That is, a remaining duration of the first TXOP may satisfy a duration requirement of the second transmission duration indicated by the second AP by the third information field.

The third value and the fourth value are different values, for example, the third value may be 1, and the fourth value may be 0, which is not limited herein.

At S42, the first frame is sent to enable the first AP to share the TXOP with at least one shared AP or share the TXOP with no shared AP based on the first frame sent by one or more shared APs.

In some embodiments, after the second AP sends the first frame, the first AP may share the TXOP with the at least one shared AP or may share the TXOP with no shared AP according to the first frame sent by the at least one shared AP. For a specific implementation of the first AP, reference may be made to the implementation shown in S32 in FIG. 3, which will not be repeated here.

In some embodiments, when the second AP requires the first AP to share the TXOP within the first TXOP, that is, requires to perform data transmission within the first TXOP, after receiving an MU-RTS TXS trigger frame sent by the first AP, the second AP may determine whether the MU-RTS TXS trigger frame sent by the first AP includes a user information field corresponding to the second AP.

The MU-RTS TXS trigger frame sent by the first AP includes at least one user information field, a user information field corresponds to one shared AP, and the user information field indicates, by an allocation duration field, a third transmission duration of the TXOP shared by the first AP to the shared AP.

In this case, when the MU-RTS TXS trigger frame includes the user information field corresponding to the second AP, and the user information field corresponding to the second AP only indicates the third transmission duration of the TXOP shared with the second AP by the allocation duration field, the second AP may perform the data transmission within the corresponding third transmission duration after receiving the MU-RTS TXS trigger frame, and not perform the data transmission outside the third transmission duration. Alternatively, after receiving the trigger frame sent by the first AP for indicating the second AP for data transmission, the second AP may perform the data transmission within the third transmission duration after receiving the trigger frame, and stop the data transmission after the third transmission duration ends.

Optionally, at least some of the user information field of the MU-RTS TXS trigger frame sent by the first AP further include a fourth information field, and the fourth information field indicates a start time of the TXOP shared to a corresponding shared AP.

In this case, when the MU-RTS TXS trigger frame includes the user information field corresponding to the second AP, and the user information field corresponding to the second AP further indicates, by the fourth information field, the start time of the TXOP shared with the second AP, the second AP performs the data transmission within the third transmission duration after that start time (allocated by the first AP to the second AP), and stops the data transmission after the third transmission duration ends.

The communication method in embodiments of the present disclosure may include at least one of above steps and embodiments. For example, any one of S41 to S42 may be implemented as an independent embodiment, and any combination of any number of S41 to S42 may be implemented as an independent embodiment, which is not limited herein.

FIG. 5 is a block diagram of an AP according to embodiments of the present disclosure. As shown in FIG. 5, an AP 500 may include: a transceiver module 501.

In some embodiments, the transceiver module 501 is configured to determine an MU-RTS TXS trigger frame, in which the MU-RTS TXS trigger frame includes a TXOP shared by the first AP to at least one second AP, and the MU-RTS TXS trigger frame is configured to receive at least one first frame, in which a first frame is sent by a shared AP and indicates whether the corresponding shared AP requires a first AP to share a TXOP within a first TXOP; and share the TXOP with at least one of shared APs, or share the TXOP with no shared AP, according to the at least one first frame.

Optionally, the AP 500 further includes a processing module 502, and the processing module 502 is configured to perform at least one of the processing steps performed by the first AP in any one of the above methods (for example, S203 to S205, S207 to S208, S210, S212 to S213, or S215, which is not limited herein), which will not be repeated here.

Optionally, the transceiver module 501 is configured to perform at least one of the transceiving steps performed by the first AP in any one of the above methods (for example, S201, S206, S209, S211, S214, S216, or S31 to S32, which is not limited herein), which will not be repeated here.

FIG. 6 is a block diagram of an AP according to embodiments of the present disclosure. As shown in FIG. 6, an AP 600 may include: a processing module 601 and a transceiver module 602.

In some embodiments, the processing module 601 is configured to determine a first frame, in which the first frame indicates whether a second AP requires a first AP to share a TXOP within a first TXOP, and the second AP is any shared AP of the first AP; and the transceiver module 602 is configured to send the first frame to enable the first AP to share the TXOP with at least one shared AP or share the TXOP with no shared AP based on the first frame sent by one or more shared APs.

Optionally, the transceiver module 602 is configured to perform at least one of the transceiving steps performed by the second AP in any one of the above methods (for example, S202, or S42, which is not limited herein), which will not be repeated here.

Optionally, the processing module 601 is configured to perform at least one of the processing steps performed by the second AP in any one of the above methods (for example, S217, or S41, which is not limited herein), which will not be repeated here.

It may be understood that the division of units or modules above is merely a division of logical functions. In actual implementations, the units or modules may be fully or partially integrated into a single physical entity or may be physically separated. In addition, the units or modules may be implemented in a form of a processor invoking software. For example, the apparatus may include a processor, which is connected to a memory for storing instructions. The processor invokes the instructions stored in the memory to implement any one of the above methods or the functions of the units or modules. The processor may be a general-purpose processor, such as a central processing unit (CPU) or a microprocessor, and the memory may be internal or external to the apparatus. Or, the units or modules in the apparatus may be implemented in a form of a hardware circuit. Some or all of the functions of the units or modules may be realized via a design of the hardware circuit. The hardware circuit may be understood as one or more processors. For example, in an implementation, the hardware circuit is an application-specific integrated circuit (ASIC). Functions of some or all of the units or modules are realized by designing logical relationships among components in the circuit. For another example, in another implementation, the hardware circuit may be implemented using a programmable logic device (PLD). Taking a field programmable gate array (FPGA) as an example, the FPGA may include a large number of logic gate circuits, and connection relationships among the logic gate circuits are configured by configuration files to realize the functions of some or all of the units or modules. All units or modules of the above apparatus may be fully implemented in a form of the processor invoking software, or fully implemented in a form of the hardware circuit, or partially implemented in a form of the processor invoking software and the remaining part implemented in a form of the hardware circuit.

In embodiments of the present disclosure, the processor is a circuit with a signal processing capability. In an implementation, the processor may be a circuit capable of reading and executing instructions, such as a central processing unit (CPU), a microprocessor, a graphics processing unit (GPU) (which may be understood as a microprocessor), or a digital signal processor (DSP). In another implementation, the processor may realize certain functions via a logical relationship of the hardware circuit. The logical relationship of the hardware circuit may be fixed or reconfigured. For example, the processor may be a hardware circuit implemented as an ASIC or PLD, such as an FPGA. In a reconfigurable hardware circuit, a process in which the processor loads configuration files to configure the hardware circuit may be understood as a process that the processor loads instructions to realize the functions of some or all of the units or the modules. In addition, the hardware circuit may be designed specifically for artificial intelligence and may be understood as an ASIC, such as a neural network processing unit (NPU), a tensor processing unit (TPU), or a deep learning processing unit (DPU).

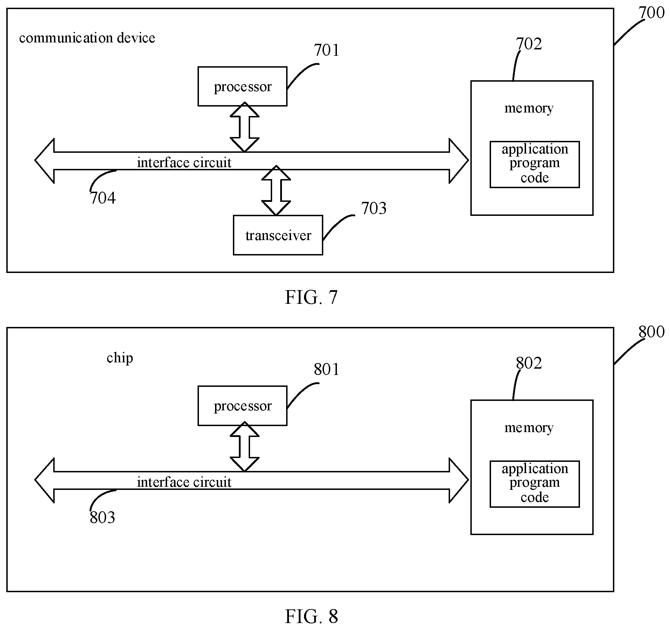

FIG. 7 is a block diagram of a communication device according to embodiments of the present disclosure. The communication device 700 may be a first AP or a second AP, or may be a chip, a chip system, or a processor that supports the first AP or the second AP to perform any one of the above methods. The communication device may be used to perform the methods described in the above method embodiments. For details, reference may be made to the descriptions in the above method embodiments.

As shown in FIG. 7, the communication device 700 includes one or more processors 701. The processor 701 may be a general-purpose processor or a special-purpose processor, for example, a baseband processor or a central processor. The baseband processor is configured to process communication protocols and communication data, and the central processor is configured to control communication devices (such as base stations, baseband chips, terminals, terminal chips, DU or CU, etc.) to execute computer programs and process computer program data. The communication device 700 is used to perform any one of the above methods.

In some embodiments, the communication device 700 further includes one or more memories 702 for storing instructions. Optionally, all or part of the memories 702 may also be located outside the communication device 700.

In some embodiments, the communication device 700 further includes one or more transceivers 703. When the communication device 700 includes one or more transceivers 703, the transceiver 703 performs at least one of the communication steps such as sending and/or receiving in the above methods (for example, S201 to S202, S206, S209, S211, S214, S216, S31 to S32, or S42, which is not limited herein), and the processor 701 performs at least one of the other steps (for example, S203 to S205, S207 to S208, S210, S212 to S213, S215, S217, or S41, which is not limited herein).

In some embodiments, the transceiver may include a receiver and/or a transmitter, which may be separate or integrated. Optionally, terms such as transceiver, transceiver unit, transceiver machine, transceiver circuit, etc. may be used interchangeably; terms such as transmitter, sending unit, transmitter machine, sending circuit, etc. may be used interchangeably; and terms such as receiver, receiving unit, receiver machine, receiving circuit, etc. may be used interchangeably.

In some embodiments, the communication device 700 may include one or more interface circuits 704. Optionally, the interface circuit 704 is connected to the memory 702, and the interface circuit 704 may be used to receive signals from the memory 702 or other devices, and may be used to send the signals to the memory 702 or other devices. For example, the interface circuit 704 may read instructions stored in the memory 702 and send the instructions to the processor 701.

The communication device 700 described in the above embodiments may be a first AP or a second AP, but the scope of the communication device 700 described in the present disclosure is not limited herein, and the structure of the communication device 700 may not be limited by FIG. 7. The communication device may be a stand-alone device or may be part of a larger device. For example, the communication device may be: (1) a stand-alone IC, a chip, a chip system or a subsystem; (2) a collection of ICs including one or more ICs. In some examples, the collection of ICs may also include storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

FIG. 8 is a block diagram of a chip 800 according to embodiments of the present disclosure. The chip 800 includes one or more processors 801, and the chip 800 is used to perform any one of the above methods.

In some embodiments, the chip 800 further includes one or more interface circuits 803. Optionally, the interface circuit 803 is connected to a memory 802, and the interface circuit 803 may be used to receive signals from the memory 802 or other devices, and the interface circuit 803 may be used to send the signals to the memory 802 or other devices. For example, the interface circuit 803 may read instructions stored in the memory 802 and send the instructions to the processor 801.

In some embodiments, the interface circuit 803 performs at least one of the communication steps such as sending and/or receiving in the above methods (for example, S201 to S202, S206, S209, S211, S214, S216, S31 to S32, or S42, which is not limited herein), and the processor 801 performs at least one of the other steps (for example, S203 to S205, S207 to S208, S210, S212 to S213, S215, S217, or S41, which is not limited herein).

Optionally, terms such as interface circuit, interface, transceiver pin, transceiver, etc. may be used interchangeably.

In some embodiments, the chip 800 further includes one or more memories 802 for storing instructions. Optionally, all or part of the memories 802 may be located outside the chip 800.

The present disclosure also provides a storage medium for storing instructions. When the instructions are running on the communication device 700, the communication device 700 is caused to implement any one of the above methods. Optionally, the storage medium is an electronic storage medium. Optionally, the storage medium is a computer-readable storage medium, which is not limited herein, and it may also be a storage medium readable by other devices. Optionally, the storage medium may be a non-transitory storage medium, which is not limited herein, and it may also be a transitory storage medium.

The present disclosure also provides a program product. When the program product is executed by the communication device 700, the communication device 700 is caused to perform any one of the above methods. Optionally, the program product is a computer program product.

The present disclosure also provides a computer program. When the computer program is running on a computer, the computer is caused to perform any one of the above methods. The above description is merely preferred embodiments of the present disclosure and an explanation of a technical principle applied. Those skilled in the art should understand that a scope of the present disclosure is not limited to a technical solution formed by a specific combination of above technical features, but also includes other technical solutions formed by any combination of the above technical features or their equivalent features without departing from the principle of the present disclosure. For example, a technical solution formed by replacing above features with technical features, including (but are not limited to) those having similar functions, disclosed in the present disclosure.

## Claims

1. A communication method, comprising:
receiving, by a first access point (AP), at least one first frame, wherein a first frame among the at least one first frame is sent by a shared AP and indicates whether the corresponding shared AP requires the first AP to share a transmission opportunity (TXOP) within a first TXOP; and
sharing, by the first AP, the TXOP with at least one shared AP, or sharing the TXOP with no shared AP, according to the at least one first frame.

2. The communication method of claim 1, wherein the first frame comprises a first identifier bit, the first identifier bit indicates, by a first value, that the corresponding shared AP requires the first AP to share the TXOP within the first TXOP, and the first identifier bit indicates, by a second value, that the corresponding shared AP does not require the first AP to share the TXOP within the first TXOP.

3. The communication method of claim 1 or 2, further comprising:
sending, by the first AP, a second frame, wherein the second frame is configured to discover whether the shared AP of the first AP requires the first AP to share the TXOP within the first TXOP;
wherein the second frame comprises at least one of:
a first information field, wherein the first information field indicates a first transmission duration remaining in the first TXOP after the first AP sends the second frame; or
a second information field, wherein the second information field indicates a response timeout of the second frame.

4. The communication method of claim 3, wherein the first frame sent by the shared AP that requires the first AP to share the TXOP within the first TXOP further comprises:
a third information field, wherein the third information field indicates a second transmission duration required by the corresponding shared AP for data transmission within the first TXOP, the second transmission duration is less than a first duration, and the first duration is a difference between the first transmission duration and the response timeout of the second frame; and
a second identifier bit, wherein the second identifier bit indicates, by a third value, that a data transmission type of the corresponding shared AP is an emergency transmission type, and indicates, by a fourth value, that the data transmission type of the corresponding shared AP is not the emergency transmission type.

5. The communication method of claim 4, wherein sharing, by the first AP, the TXOP with at least one shared AP, or sharing the TXOP with no shared AP, according to the at least one first frame comprises:
in a case that it is determined, according to the at least one first frame, that there is no shared AP requiring the first AP to share the TXOP within the first TXOP, sharing, by the first AP, the TXOP with no shared AP within the first TXOP; and
in a case that it is determined, according to the at least one first frame, that there is at least one first shared AP requiring the first AP to share the TXOP within the first TXOP, determining and sending a multi-user request-to-send transmission opportunity sharing (MU-RTS TXS) trigger frame based on a communication range of the at least one first shared AP, wherein the MU-RTS TXS trigger frame is configured to share one or more TXOPs with at least one shared AP among one or more first shared APs; and
the method further comprises:
in a case that no first frame sent by any shared AP is received within the response timeout, sharing, by the first AP, the TXOP with no shared AP within the first TXOP.

6. The communication method of claim 5, wherein in a case that communication ranges of the at least one first shared AP respectively do not overlap with each other, the MU-RTS TXS trigger frame comprises at least one user information field;
wherein, a user information field among the at least one user information field comprises an allocation duration field, the allocation duration field indicates a third transmission duration of the TXOP shared with a first shared AP, and the third transmission duration indicated by the allocation duration field is greater than or equal to the second transmission duration of the corresponding first shared AP and less than the first duration.

7. The communication method of claim 5, wherein:
in a case that communication ranges of the at least one first shared AP overlap with each other and a sum of second transmission durations corresponding to the at least one first shared AP is less than the first duration, the MU-RTS TXS trigger frame comprises at least one user information field, and a user information field among the at least one user information field comprises an allocation duration field and a fourth information field;
the allocation duration field indicates a third transmission duration of the TXOP shared with a first shared AP, the third transmission duration indicated by the allocation duration field is greater than or equal to the second transmission duration of a second shared AP, and a sum of third transmission durations indicated by one or more allocation duration fields is less than the first duration;
the fourth information field indicates a start time of the TXOP shared with the corresponding first shared AP; and
the one or more TXOPs shared by the MU-RTS TXS trigger frame with the at least one shared AP do not overlap with each other.

8. The communication method of claim 5, wherein:
in a case that communication ranges of the at least one first shared AP overlap with each other and a sum of second transmission durations of the at least one first shared AP is greater than the first duration, the MU-RTS TXS trigger frame comprises at least one user information field, and a user information field among the at least one user information field comprises an allocation duration field and a fourth information field;
the allocation duration field indicates a third transmission duration of the TXOP shared with a second shared AP, the third transmission duration indicated by the allocation duration field is greater than or equal to the second transmission duration of the corresponding second shared AP, and a sum of third transmission durations indicated by one or more allocation duration fields is less than the first duration;
the second shared AP is determined from the at least one first shared AP based on the first duration and the second transmission duration corresponding to the at least one first shared AP respectively;
the fourth information field indicates a start time of the TXOP shared with the corresponding second shared AP, and the start time of the TXOP shared with the corresponding second shared AP is determined based on a reception time of the first frame sent by the second shared AP and a data transmission type corresponding to the second shared AP; and
one or more TXOPs shared by the MU-RTS TXS trigger frame with one or more second shared APs do not overlap with each other.

9. The communication method of claim 5, wherein in a case that the at least one first shared AP comprises at least one third shared AP and a plurality of fourth shared APs, the MU-RTS TXS trigger frame comprises a plurality of user information fields, and a user information field among the plurality of user information fields comprises an allocation duration field,
wherein a communication range of a third shared AP among the at least one third shared AP does not overlap with a communication range of any other first shared AP, communication ranges of the plurality of fourth shared APs overlap with each other, and the at least one third shared AP and the plurality of fourth shared APs belong to the at least one first shared AP;
in a case that a sum of second transmission durations corresponding to the plurality of fourth shared APs is less than the first duration, the allocation duration field indicates a third transmission duration of the TXOP shared with a third shared AP or shared with a fourth shared AP, the third transmission duration indicated by the allocation duration field is greater than or equal to the second transmission duration corresponding to the corresponding third shared AP or the second transmission duration corresponding to the corresponding fourth shared AP, and a sum of third transmission durations corresponding to the plurality of fourth shared APs is less than the first duration, and a sum of third transmission durations corresponding to the at least one third shared AP is less than the first duration,
wherein the user information field corresponding to the fourth shared AP further comprises a fourth information field, the fourth information field indicates a start time of the TXOP shared with the fourth shared AP, and TXOPs shared by the MU-RTS TXS trigger frame with the plurality of fourth shared APs do not overlap with each other;
in a case that the sum of second transmission durations corresponding to the plurality of fourth shared APs is greater than the first duration, the allocation duration field indicates a third transmission duration of the TXOP shared with a third shared AP or shared with a fifth shared AP, the fifth shared AP is determined from the plurality of fourth shared APs based on the first duration and the second transmission durations corresponding to the plurality of fourth shared APs respectively, the third transmission duration indicated by the allocation duration field is greater than or equal to the second transmission duration corresponding to the corresponding third shared AP or the second transmission duration corresponding to the corresponding fifth shared AP, and a sum of third transmission durations indicated by one or more allocation duration fields corresponding to one or more fifth shared APs respectively is less than the first duration,
wherein the user information field corresponding to the fifth shared AP further comprises a fourth information field, the fourth information field indicates a start time of the TXOP shared with the fifth shared AP, and the start time of the TXOP shared with the fifth shared AP is determined based on a reception time of the first frame sent by the fifth shared AP and a data transmission type of the fifth shared AP, and one or more TXOPs shared by the MU-RTS TXS trigger frame with the one or more fifth shared APs respectively do not overlap with each other.

10. A communication method, comprising:
determining, by a second access point (AP), a first frame, wherein the first frame indicates whether the second AP requires a first AP to share a transmission opportunity (TXOP) within a first TXOP, and the second AP is any shared AP of the first AP; and
sending, by the second AP, the first frame to enable the first AP to share the TXOP with at least one of shared APs or share the TXOP with no shared AP based on the first frame sent by one or more shared APs.

11. The communication method of claim 10, further comprising:
receiving, by the second AP, a second frame sent by the first AP, wherein the second frame is configured to discover whether a shared AP of the first AP requires the first AP to share the TXOP within the first TXOP;
wherein the second frame comprises at least one of:
a first information field, wherein the first information field indicates a first transmission duration remaining for the first TXOP after the first AP sends the second frame; or
a second information field, wherein the second information field indicates a response timeout of the second frame.

12. The communication method of claim 11, wherein sending, by the second AP, the first frame comprises:
sending, by the second AP, the first frame within the response timeout of the second frame, wherein the first frame comprises a first identifier bit, the first identifier bit indicates, by a first value, that the second AP requires the first AP to share the TXOP within the first TXOP, and the first identifier bit indicates, by a second value, that the second AP does not require the first AP to share the TXOP within the first TXOP; and
the method further comprises:
in a case that data transmission is not required within the first TXOP, not responding, by the second AP, to the second frame within the response timeout of the second frame.

13. The communication method of claim 11, wherein in a case that the second AP requires the first AP to share the TXOP within the first TXOP, the first frame further comprises at least one of:
a third information field, wherein the third information field indicates a second transmission duration required by the second AP for data transmission within the first TXOP, the second transmission duration is less than a first duration, and the first duration is a difference between the first transmission duration and the response timeout of the second frame; or
a second identifier bit, wherein the second identifier bit indicates, by a third value, that a data transmission type of the second AP is an emergency transmission type, and indicates, by a fourth value, that the data transmission type of the second AP is not the emergency transmission type.

14. The communication method of claim 10, wherein in a case that the second AP requires the first AP to share the TXOP within the first TXOP, the method further comprises:
receiving, by the second AP, a multi-user request-to-send transmission opportunity sharing (MU-RTS TXS) trigger frame sent by the first AP, wherein the MU-RTS TXS trigger frame comprises at least one user information field, a user information field among the at least one user information field comprises an allocation duration field, the allocation duration field indicates a third transmission duration of the TXOP shared with a shared AP, and the third transmission duration indicated by the allocation duration field is greater than or equal to a second transmission duration required by the corresponding shared AP for data transmission within the first TXOP; and
in a case that the MU-RTS TXS trigger frame comprises a user information field corresponding to the second AP, performing, by the second AP, the data transmission within the third transmission duration indicated by the allocation duration field corresponding to the second AP.

15. The communication method of claim 14, wherein in a case that the user information field corresponding to the second AP further indicates, by a fourth information field, a start time of the TXOP shared with the second AP, performing, by the second AP, the data transmission within the third transmission duration comprises:
performing, by the second AP, the data transmission within the third transmission duration after the start time.

16. An access point (AP), comprising:
a transceiver module, configured to receive at least one first frame, wherein a first frame among the at least one first frame is sent by a shared AP and indicates whether the corresponding shared AP requires a first AP to share a transmission opportunity (TXOP) within a first TXOP; and
the transceiver module is configured to share the TXOP with at least one of shared APs, or share the TXOP with no shared AP, according to the at least one first frame.

17. An access point (AP), comprising:
a processing module, configured to determine a first frame, wherein the first frame indicates whether a second AP requires a first AP to share a transmission opportunity (TXOP) within a first TXOP, and the second AP is any shared AP of the first AP; and
a transceiver module, configured to send the first frame to enable the first AP to share the TXOP with at least one of shared APs or share the TXOP with no shared AP based on the first frame sent by one or more shared APs.

18. An access point (AP), comprising:
one or more processors,
wherein the AP is configured to perform the communication method of any one of claims 1 to 9.

19. An access point (AP), comprising:
one or more processors,
wherein the AP is configured to perform the communication method of any one of claims 10 to 15.

20. A storage medium for storing instructions that, when executed on a communication device, cause the communication device to perform the communication method of any one of claims 1 to 9 or any one of claims 10 to 15.
